(19) Europäisches Patentamt
European Patent Office
Office européen des brevets

(11) EP 0 452 460 B2

(12) NEUE EUROPÄISCHE PATENTSCHRIFT

(45) Veröffentlichungstag und Bekanntmachung des Hinweises auf die Entscheidung über den Einspruch:
**11.08.1999 Patentblatt 1999/32**

(45) Hinweis auf die Patenterteilung:
**18.01.1995 Patentblatt 1995/03**

(21) Anmeldenummer: **90916747.0**

(22) Anmeldetag: **01.10.1990**

(51) Int Cl.[6]: **C09K 19/00**, G02F 1/133, C09K 19/42, C09K 19/44

(86) Internationale Anmeldenummer:
**PCT/EP90/01649**

(87) Internationale Veröffentlichungsnummer:
**WO 91/05029 (18.04.1991 Gazette 1991/09)**

(54) **ELEKTROOPTISCHES FLÜSSIGKRISTALLSYSTEM**
ELECTRO-OPTICAL LIQUID CRYSTAL SYSTEM
SYSTEME MESOMORPHE ELECTRO-OPTIQUE

(84) Benannte Vertragsstaaten:
**CH DE DK FR GB IT LI NL SE**

(30) Priorität:
**02.10.1989 GB 8922168**
**01.11.1989 DE 3936307**
**01.11.1989 DE 3936308**
**09.12.1989 DE 3940788**
**10.01.1990 DE 4000470**
**10.01.1990 DE 4000471**
**12.01.1990 DE 4000723**
**16.01.1990 DE 4001023**
**19.01.1990 DE 4001539**
**19.01.1990 DE 4001540**
**19.01.1990 DE 4001541**
**22.01.1990 DE 4001683**
**23.01.1990 DE 4001843**
**25.01.1990 DE 4002146**
**29.01.1990 GB 9001944**
**20.02.1990 DE 4005236**

(43) Veröffentlichungstag der Anmeldung:
**23.10.1991 Patentblatt 1991/43**

(73) Patentinhaber: **MERCK PATENT GmbH**
**64271 Darmstadt (DE)**

(72) Erfinder:
- **COATES, David**
  **Merley, Wimborne Dorset BH21 3SW (GB)**
- **MARDEN, Shirley**
  **Parkstone, Poole Dorset BH14 8TP (GB)**
- **SMITH, Graham 10 Henbury Close**
  **Poole Dorset BH17 8AX (GB)**
- **FINKENZELLER, Ulrich**
  **D-6831 Plankstadt (DE)**
- **REIFFENRATH, Volker**
  **D-6101 Rossdorf (DE)**
- **HITTICH, Reinhard**
  **D-6101 Modautal 1 (DE)**
- **WILHELM, Stefan**
  **D-6100 Darmstadt (DE)**

(56) Entgegenhaltungen:

| | |
|---|---|
| EP-A- 0 156 615 | EP-A- 0 205 261 |
| EP-A- 0 258 868 | EP-A- 0 313 053 |
| EP-A- 0 316 715 | EP-A- 0 364 588 |
| WO-A-88/07514 | DE-A- 3 606 153 |
| US-A- 4 616 903 | US-A- 4 659 500 |

- **Dainippon Ink and Chemical Inc.,Tokyo "Materials for the Presentation of the second new products", 22.11.1985**



Printed by Jouve, 75001 PARIS (FR)

## Beschreibung

Die Erfindung betrifft ein elektrooptisches Flüssigkristallsystem.

- welches zwischen 2 Elektroden, die gegebenenfalls auf Substratplatten aufgebracht sind, eine dielektrisch positive Flüssigkristallmischung und ein weiteres optisch transparentes Medium enthält, wobei die Flüssigkristallmischung in Form mehr oder weniger voneinander äbgegrenzter Kompartimente in das optisch transparente Medium eingebettet ist oder in dem optisch transparenten Medium eine mehr oder weniger zusammenhängende, kontinuierliche Phase bildet,
- dessen Flüssigkristallmoleküle im ausgeschalteten Zustand eine unregelmäßige Orientierung aufweisen,
- bei dem einer der Brechungsindizes der Flüssigkristallmischung im wesentlichen mit dem Brechungsindex der Matrix $n_M$ übereinstimmt und/oder bei dem der Quotient aus der Masse der Flüssigkristallmischung und der Masse des optisch transparenten Mediums 1,5 oder mehr beträgt, und
- welches in einem der beiden Schaltzustände unabhängig von der Polarisation des einfallenden Lichts eine gegenüber dem anderen Zustand verminderte Transmission aufweist,

sowie in diesem System verwendete Flüssigkristallmischungen.

Je nach dem Massenanteil der Flüssigkristallmischung an dem System kann dieser in mehr oder weniger von einander abgegrenzten Flüssigkristallmikrotröpfchen in das optisch transparente Medium eingebettet sein oder aber eine mehr oder weniger zusammenhängende, kontinuierliche Phase bilden, in der das optisch transparente Medium z.B. in Form von Partikeln vorliegt. Eine kontinuierliche Phase wird z.B. auch erhalten, wenn das optisch transparente Medium ein schwammartiges, 3-dimensionales Netzwerk bildet, dessen Poren, in denen sich der Flüssigkristall befindet, in mehr oder weniger starkem Ausmaß ineinander übergehen. Durch den Ausdruck Flüssigkristall-Mikrotröpfchen werden hier kleine, voneinander abgegrenzte Flüssigkristallkompartimente gekennzeichnet, die jedoch keineswegs eine kugelförmige Gestalt aufweisen müssen, sondern unregelmäßig geformt und/oder deformiert sein können.

Enthält das optisch transparente Medium Flüssigkristall-Mikrotröpfchen, wird es im folgenden als Matrix bezeichnet; liegt dagegen eine mehr oder weniger kontinuierliche Phase des Flüssigkristalls vor, wird das Medium durch den Ausdruck Netzwerk charakterisiert.

NCAP- und PDLC-Filme (NCAP = nematic curvilinear aligned phases, PDLC = polymer dispersed liquid crystal) sind Beispiele für elektrooptische Flüssigkristallsysteme, bei denen der Flüssigkristall in Form von Mikrotröpfen in die Matrix eingebettet ist. NCAP-Filme werden gewöhnlich dadurch erhalten, daß das verkapselnde polymere Material, wie z.B. Polyvinylalkohol, die Flüssigkristallmischung und ein Trägermaterial, wie z.B. Wasser, in einer Kolloidmühle innig vermischt werden. Anschließend wird das Trägermaterial z.B. durch Trocknung entfernt. Ein entsprechendes Verfahren ist in US 4,435,047 beschrieben. Dagegen wird bei der z.B. in US 4,688,900, Mol. Cryst. Liq. Cryst. Nonlin. Optic, 157, (1988), 427-441, WO 89/06264 und EP 0,272,585 beschriebenen Herstellung von PDLC-Filmen die Flüssigkristallmischung zunächst mit Monomeren oder Oligomeren des matrixbildenden Materials homogen vermischt. Anschließend wird die Mischung polymerisiert und die Phasentrennung induziert (sog. PIPS-Technologie; polymerization-induced phase separation). Daneben muß weiter zwischen TIPS (temperature-induced phase separation) und SIPS (solvent-induced phase separation) unterschieden werden (Mol. Cryst. Liq. Cryst. Inc. Nonlin. Opt. 157 - (1988) 427).

Das in EP 0,313,053 und EP 0,359,146 beschriebene PN-System (PN = Polymer Network) weist eine schwammartige Netzwerkstruktur des optisch transparenten Mediums auf. Der Anteil der Flüssigkristallmischung an der Masse der lichtmodulierenden Schicht ist im allgemeinen bei derartigen Systemen größer als 60 % und liegt insbesondere zwischen 70 - 90 %. Zur Herstellung der PN-Systeme wird üblicherweise eine Mischung aus dem Flüssigkristall, Monomeren oder Oligomeren des das 3-dimensionale Netzwerk bildenden Materials und ein Polymerisationsinitiator, insbesondere ein Photoinitiator, zwischen 2 mit Elektroden versehene Substratplatten gebracht und dann z. B. durch Lichteinstrahlung polymerisiert.

Der Flüssigkristall hat im allgemeinen eine positive dielektrische Anisotropie $\Delta\varepsilon$ und eine relativ hohe optische Anisotropie. Bei Mikrotröpfchen-Matrix-Systemen wird einer der Brechnungsindices des Flüssigkristalls, üblicherweise der ordentliche Brechungsindex $n_o$ so gewählt, daß er mit dem Brechungsindex $n_M$ der polymeren Matrix mehr oder weniger zusammenfällt. Bei Netzwerk-Systemen ist eine Anpassung der Brechungsindizes wegen des üblicherweise sehr viel höheren Flüssigkristallanteils an der lichtmodulierenden Schicht nicht unbedingt erforderlich, kann aber zur Erhöhung des Lichtdurchsatzes und des Kontrastes vorgenommen werden. Man beobachtet an diesen elektrooptischen Flüssigkristall-Systemen einen elektrisch schaltbaren Lichtstreuungseffekt.

Ist keine Spannung an die Elektroden, zwischen denen die Matrix bzw. das Netzwerk üblicherweise sandwichartig angeordnet ist, angelegt, wird auftreffendes Licht an den statistisch ausgerichteten Flüssigkristallmolekülen stark gestreut, das System ist undurchsichtig. Beim Anlegen einer Spannung werden die Flüssigkristallmoleküle parallel zum Feld und senkrecht zum E-Vektor des hindurchgehenden Lichts ausgerichtet.

Bei Mikrotröpfchen-Matrix-Systemen sieht senkrecht auftreffendes Licht bei anliegender Spannung wegen der Anpassung von $n_o$ und $n_M$ ein optisch isotropes Medium und das System erscheint durchsichtig. Eine Anpassung ist erforderlich, um eine Streuung des Lichts an der Phasengrenze Matrix/Flüssigkristalltröpfchen zu vermeiden. In EP 0 272 585 ist eine andere Ausführungsform beschrieben, bei der der Brechungsindex $n_x$, den der Flüssigkristall bei vollständig statistischer Orientierung aufweist, an den Brechungsindex der Matrix $n_M$ angepaßt ist. In diesem Fall ist das System im feldfreien Zustand durchsichtig, und es wird durch Anlegen einer Spannung in den opaken Zustand überführt.

Bei Netzwerk-Systemen ist eine Anpassung der Brechungsindizes nicht unbedingt erforderlich, da wegen des hohen Flüssigkristallanteils an der Masse der lichtmodulierenden Schicht die Streuung an der Phasengrenze Netzwerk-Flüssigkristall offensichtlich weniger stark ist. Das System erscheint im eingeschalteten Zustand auch ohne Anpassung der Brechungsindizes durchsichtig. Bei Netzwerk-Systemen ist zur Erzielung einer möglichst geringen Transmission im nicht geschalteten Zustand die Verwendung von Flüssigkristallen mit hoher optischer Anisotropie bevorzugt.

In WO 89/09807 ist die Verwendung eines optisch anisotropen, z.B. flüssigkristallin-polymeren Matrixmaterials vorgeschlagen woreden, um die im durchsichtigen Zustand des Systems häufig beobachtete Trübung ("haze", insbesondere "off-axis haze") zu vermindern. In derartigen Systemen können die Brechungsindices von Flüssigkristall und optisch anisotroper Matrix so aneinander angepaßt werden, daß der durchsichtige Zustand entweder bei angelegter oder bei abgeschalteter Spannung erhalten wird.

Elektrooptische Flüssigkristallsysteme gemäß dem Oberbegriff von Anspruch 1 sind vor allem für großflächige Anzeigensysteme, für architektonische Anwendungen (Fenster, Raumteiler, Sonnendächer etc.) und für Kraftfahrzeuge (Fenster, Sonnendächer etc.) vorgeschlagen worden, wobei sich diese Systeme auch zur Temperaturregulierung durch gesteuerte Abschirmung der Sonnenstrahlung eignen. Sie können durch Anlegen einer Gleich- oder Wechselspannung geschaltet werden.

Da diese Systeme insbesondere auch für "outdoor"-Anwendungen vorgesehen sind, werden Flüssigkristallmischungen benötigt, die durch einen hohen Klärpunkt, hohes $\Delta\varepsilon$, einen weiten nematischen Bereich, eine günstige Temperaturabhängigkeit der elektrooptischen Paramter und eine hohe UV- und Temperaturstabilität gekennzeichnet sind.

Weitere Anwendungen sind zum Beispiel:

- GH-Anzeigen-Systeme, wobei das Spektrum über einfache Segmentanzeigen bis zu Displays reicht, auf die mit herkömmlichen Drucktechniken beliebige Elektrodenmuster aufgebracht werden können. Anwendungen: Kraftfahrzeug, Großanzeigen, Werbeflächen, Uhren
- Mit aktiver oder passiver Matrix angesteuerte Displays mit hohem Informationsgehalt
- Projektionssysteme
- Schalter.

Auch hier werden Flüssigkristallmischungen mit insbesondere hohem $\Delta\varepsilon$, hohem elektrischen Widerstand, günstigen Werten der elektrooptischen Parameter sowie deren Temperaturabhängigkeit, vorteilhaften Werten der Viskosität und einer hohen UV- und Temperaturstabilität benötigt.

In Mikrotröpfchen-Matrix-Systemen werden bisher üblicherweise LC-Mischungen eingesetzt, die aus Alkyl- oder Alkoxycyanobiphenylen und -terphenylen bestehen. So wird z.B. in US 4,688,900, EP 0,205,261 und EP 0,272,585 die Verwendung der Flüssigkristallmischung E8 (hergestellt von BDH, Poole, Great Britain) beschrieben. Diese Flüssigkristallmischung zeichnet sich durch einen hohen Wert für die optische Anisotropie $\Delta n$ von 0,247 und einen relativ hohen Wert für die Fließviskosität $\eta$ (20 ° C) von 54 $mm^2/s$ aus, hat jedoch gleichzeitig einen relativ niedrigen Klärpunkt von nur 72 °C. Setzt man der Mischung mehrkernige Polyphenylverbindungen zur Erhöhung des Klärpunktes zu, resultiert ein höherer Wert für die Fließviskosität $\eta$ und ein unverändert hoher oder höherer Wert für die optische Anisotropie $\Delta n$. Hohe $\Delta n$-Werte sorgen zwar einerseits für eine starke Lichtstreuung im opaken Zustand, andererseits können sie jedoch eine Trübung des Systems im geschalteten Zustand ("haze", insbesondere "off-axis haze") und damit eine Verschlechterung der elektrooptischen Eigenschaften bewirken. Zwar ist bei Systemen, die von einer relativ niederfrequenten Wechselspannung angesteuert werden, eine hohe Fließviskosität $\eta$ erwünscht, um eine flimmerfreie Anzeige zu erhalten; andererseits werden jedoch in Matrixdisplays mit hohem Informationsgehalt zur Realisierung schneller Schaltzeiten Flüssigkristallmischungen mit relativ niedriger Viskosität benötigt.

Die in US 4,671,618 verwendete Flüssigkristallmischung E7 (hergestellt von BDH, Poole, Great Britain), die ebenfalls aus Alkyl- und Alkoxycyanobiphenylen und -terphenylen besteht, weist zwar mit $\eta = 39$ $mm^2/s$ eine niedrigere Fließviskosität und mit $\Delta n = 0{,}225$ eine etwas kleinere optische Anisotropie $\Delta n$ auf als E8, jedoch ist gleichzeitig der Klärpunkt $T_c = 60.5$ °C erheblich niedriger. Die dielektrische Anisotropie der Mischung E7 beträgt $\Delta\varepsilon$ 13,8 und ist damit etwas kleiner als die von E8 mit $\Delta\varepsilon = 15{,}6$. Zur Erzielung möglichst kleiner Schwellenspannungen sind noch höhere Werte für $\Delta\varepsilon$ vorteilhaft.

In EP 0,313,053 werden für Netzwerk-Systeme Flüssigkristallmischungen vorgeschlagen, die auf 2-(4-Cyanophenyl)-pyridinen basieren. Derartige Flüssigkristallmischungen weisen zwar relativ hohe Werte für die dielektrische Anisotropie $\Delta\varepsilon$ und damit relativ kleine Schwellenspannungen und hohe bis sehr hohe Werte für die optische Anisotropie $\Delta n$ auf. Gleichzeitig sind diese Flüssigkristalle jedoch durch eine relativ hohe Viskosität $\eta$, einen relativ niedrigen Klärpunkt $T_c$ und einen für viele Anwendungen nicht ausreichenden Arbeitstemperaturbereich gekennzeichnet. Darüber hinaus weisen Cyanophenyl-Pyridin-Verhindungen i.a. eine geringere UV- und Temperaturstäbilität als Cyano-Oligophenyl-Verbindungen auf.

Die in EP 0,359,146 beschriebenen PN-Systeme basieren auf Flüsigkristallmischungen, die eine hohe Doppelbrechung $\Delta n$ zwischen 0.18 und 0.3 und eine hohe dielektrische Anisotropie $\Delta\varepsilon$ zwischen 15 und 30 aufweisen.

Die bisher verwendeten Flüssigkristalle erfüllen die Forderungen nach einem weiten nematischen Bereich, einem hohen Klärpunkt, einer sehr hohen thermischen und UV-Stabilität, einer Abwesenheit smektischer Phasen bis zu tiefen Temperaturen, einer im Hinblick auf die jeweilige Anwendung optimierbaren optischen Anisotropie $\Delta n$ und Fließviskosität $\eta$ und einem hohen $\Delta\varepsilon$ nur unzureichend.

Daneben weisen die bisherigen Flüssigkristalle häufig eine zu geringe Mischbarkeit mit den Monomeren und/oder Oligomeren des zur Bildung der Matrix bzw. des Netzwerks verwendeten Polymers auf, was die Herstellung von PN-Systemen erheblich beeinträchtigt und bei Mikrotröpfchen-Matrix-Systemen insbesondere die Anwendung der PIPS-Technologie erheblich beschränkt. Darüber hinaus sind die Flüssigkristalle häufig durch eine zu hohe Löslichkeit im matrix- bzw. netzwerkbildenden Polymer gekennzeichnet. Ein weiterer Nachteil der bisherigen Flüssigkristalle besteht häufig darin, daß der Flüssigkristall für die jeweilige Anwendung ungünstige Werte der elektrooptischen Parameter wie z.B. der Steilheit der elektrooptischen Kennlinie und/oder der Temperaturabhängigkeit der elektrooptischen Parameter wie z.B. der Schwellenspannung zeigt.

Es besteht somit immer noch ein großer Bedarf an elektrooptischen Flüssigkristallsystemen, die den entsprechenden Anforderungen besser gerecht werden und die geschilderten Nachteile nicht oder nur in geringeren Umfang aufweisen.

Der Erfindung lag die Aufgabe zugrunde, elektrooptische Flüssigkristallsysteme und Flüssigkristalle bereitzustellen, die die angeführten Nachteile herkömmlicher Systeme nicht oder nur in geringerem Maße aufweisen. Weitere Aufgaben der vorliegenden Erfndung ergeben sich für den Fachmann unmittelbar aus dre folgenden detaillierten Beschreibung.

Es wurde gefunden, daß die der Erfindung zugrunde liegenden Aufgaben gelöst werden können, wenn man für die Systeme Flüssigkristallmischungen gemäß Anspruch 1 verwendet.

Gegenstand der Erfindung ist somit ein elektrooptisches Flüssigkristallsystem gemäß Anspruch 1.

Der Aufbau der erfindungsgemäßen elektrooptischen Flüssigkristallsysteme entspricht der für derartige Systeme üblichen Bauweise. Der Begriff übliche Bauweise ist hierbei weit gefaßt und umschließt alle Abwandlungen und Modifikationen.

So ist z.B. bei PDLC- oder NCAP-Filmen die von dem durchsichtigen Medium gebildete Matrix, in der die Flüssigkristallmischung mikrodispergiert oder mikroverkapselt ist, sandwichartig zwischen leitenden Elektroden angeordnet.

Die Elektroden sind i.a. auf Substratplatten aus z.B. Glas. Kunststoff o.ä. aufgebracht; ggf. kann die Matrix jedoch auch direkt mit Elektroden versehen werden, so daß auf die Verwendung von Substraten verzichtet werden kann.

Bei Netzwerk-Systemen befindet sich der Flüssigkristall in den Poren des schwammartigen, 3-dimensionalen Netzwerks oder das optisch transparente Medium befindet sich in Form kleiner, z.B. kugelförmiger Partikel in dem Flüssigkristall. Das Netzwerk ist üblicherweise zwischen mit Elektroden versehenen Substraten angeordnet, um ein Entweichen des Flüssigkristalls zu verhindern.

Sowohl Netzwerk-Systeme als auch Mikrotröpfchen-Matrix-Systeme können reflektiv oder transmissiv betrieben werden, so daß mindestens eine Elektrode und, falls vorhanden, das zugehörige Substrat durchsichtig sind. Beide Systeme enthalten üblicherweise keine Polarisatoren, wodurch ein deutlich höherer Lichtdurchsatz resultiert. Weiterhin sind keine Orientierungsschichten erforderlich, was eine erhebliche technologische Vereinfachung bei der Herstellung dieser Systeme verglichen mit herkömmlichen Flüssigkristallsystemen wie z.B. TN- oder STN-Zellen bedeutet.

Die Matrix bzw. das 3-dimensionale Netzwerk basieren insbesondere auf isotropen Thermoplasten, Duroplasten und Elastomeren. Die erhaltenen Systeme können je nach beabsichtigter Verwendung flexibel, elastisch oder starr sein.

Ein auf einem thermoplastischen Polymer basierendes System kann bei Temperaturen, die größer als die Glastemperatur der Matrix sind, leicht durch Einwirken einer mechanischen Spannung deformiert werden. Dies kann z.B. bei Mikrotröpfchen-Matrix-Systemen dazu benutzt werden, um eine gezielt deformierte Form der Tröpfchen durch Abkühlen der Matrix auf Temperaturen unterhalb der Glastemperatur einzufrieren. Weiterhin kann z.B. die Matrix bei Temperaturen oberhalb der Glastemperatur mechanisch verstreckt oder durch Einwirkung elektrischer oder magnetischer Felder orientiert werden, wobei diese Orientierung, die bei Temperaturen unterhalb der Glastemperatur erhalten bleibt, optich anisotrope Eigenschaften der Matrix bewirkt.

Während flexible und/oder elastische Systeme bevorzugt auf Thermoplasten und/oder Elastomeren basieren, werden zur Herstellung starrer Systeme bevorzugt duroplastische Polymere verwendet. Diese können z.B. während des Aushärtens mechanisch verformt werden, wobei in der ausgehärteten Matrix z.B. die Form und Anordnung der Mikrotröpfchen fixiert ist.

In der Literatur finden sich vielfältige Angaben über zur Herstellung der Matrix bzw. des Netzwerkes besonders geeignete Materialien. So werden z.B. in US 4,435,047 oder in Liquid Crystals, 3, (1988) 1543 wasserlösliche Polymere vorgeschlagen, wie z.B. Polyvinylalkohol PVA oder latexartige Emulsionen. In US 4,671,618, US 4,673,255, US 4,688,900, WO 85/04262 und in Mol. Cryst. Liq. Cryst. Inc. Nonlin. Opt. 157 - (1988) 427 werden demgegenüber Kunstharze als geeignete Matrixmaterialien genannt wie z.B. Epoxidharze, Polyurethane, die z.B. thermisch gehärtet werden. In EP 0,272,585 werden auf photo-härtbaren Vinylverbindungen basierende Matrix- bzw. Netzwerkmaterialien beschrieben und in WO 89/06264 werden Copolymerisierte multifunktioneller Acrylate mit multifunktionellen Mercaptanen vorgeschlagen. Weitere Angaben über insbesondere für Matrixsysteme geeignete Polymere finden sich z.B. in EP 0,165,063, EP 0,345,029, EP 0,357,234 oder EP 0,205,261.

Für die Herstellung von Netzwerksystemen werden in EP 0,313,053 eine Reihe von 3-dimensional vernetzbaren Monomeren wie z.B. Di- und Triacrylate angeführt.

Daneben können aber für Matrix- und Netzwerksysteme auch weitere durchsichtige Materialien wie z.B. anorganische oxidische Glasmonolithe (US 4,814,211), weitere anorganische Materialien (s. z.B. Japanische Offenlegungsschrift 303325/1988) oder auch andere Materialien verwendet werden.

Die angeführten Materialien sollen die Erfindung lediglich beispielhaft erläutern, jedoch keinesfalls beschränken. Es können prinzipiell alle durchsichtigen Materialien verwendet werden, die die Herstellung der beschriebenen Matrix- bzw. Netzwerkstrukturen gemäß dem Oberbegriff von Anspruch 1 gestatten.

Bevorzugte Ausführungsform der erfindungsgemäßen elektrooptischen Flüssigkristallsysteme sind NCAP-Filme, PDLC-Filme und nach modifizierten Verfahren hergestellte Mikrotröpfchen-Matrix-Systeme. Verfahren zur Herstellung dieser Filme sind z.B. in US 4,688,900, US 4,673,255, US 4,671,618, WO 85/04262, US 4,435,047, EP 0,272,595, Mol. Cryst. Liq. Cryst. Inc. Nonlin. Opt. 157 (1988) 427, Liquid Crystals, 3 (1988) 1543, EP 0,165,063, EP 0,345,029, EP 0,357,234 und EP 0,205,261 beschrieben.

Eine weitere bevorzugte Ausführungsform der erfindungsgemäßen elektrooptischen Systeme sind die Netzwerk-Systeme, deren Herstellung in EP 0,313,053 beschrieben ist. Zu den Netzwerksystemen werden hier auch Anordnungen gerechnet, bei denen das transparente Medium in Form von einzelnen, z.B. kugelförmigen Partikeln in dem Flüssigkristall dispersiert ist, wie dies z.B. in GB 1,442,360 beschrieben ist.

Weiter sind aber auch solche Ausführungsformen der Erfindung umfaßt, bei denen das transparente Medium eine Struktur aufweist, die zwischen der Netzwerkstruktur auf der einen Seite und der Mikrotröpfchen-Matrix-Konfiguration auf der anderen Seite liegt.

Daneben sind auch andere, hier nicht explizit erwähnte Ausführungsformen der Erfindung umfaßt.

Die Dicke d der elektrooptischen Systeme d wird üblicherweise klein gewählt, um eine möglichst niedrige Schwellenspannung $V_{th}$ zu erzielen. So werden z.B. in US 4,435,047 Schichtdicken von 0,8 und 1,6 mm berichtet, während für die Schichtdicke in US 4,688,900 Werte zwischen 10 μm und 300 μm und in EP 0,313,053 zwischen 5 μm und 30 μm angegeben werden. Die erfindungsgemäßen elektrooptischen Systeme weisen nur in Ausnahmefällen Schichtdicken d auf, die deutlich größer sind als einige mm; bevorzugt sind Schichtdicken $d \leqq 2$ mm.

Die Schwellenspannung wird auch von der Größe der Mikrotröpfchen bzw. der Maschenweite des Netzwerks beeinflußt. Allgemein gilt, daß kleinere Mikrotröpfchen eine höhere Schwellenspannung $V_{th}$, jedoch kürzere Schaltzeiten $t_{on}$ bzw. $t_{off}$ bewirken (US 4,673,255). Experimentelle Verfahren zur Beeinflussung der mittleren Tröpfchengröße sind z.B. in US 4,673,255 und in J.L. West, Mol. Cryst. Liq. Cryst. Inc. Nonlin. Opt., 157 (1988) 427 beschrieben. In US 4,673,255 werden mittlere Tropfendurchmesser zwischen 0,1 μm und 8 μm angegeben, während z.B. eine Matrix, die auf einem Glasmonolith basiert, Poren mit einem Durchmesser zwischen 15 und 2000 Å aufweist. Für die Maschenweite des Netzwerks der PN-Systeme wird in EP 0,313,053 ein bevorzugter Bereich zwischen 0,5 und 2 μm angegeben.

Ein wesentlicher Unterschied der erfindungsgemäßen elektrooptischen Flüssigkristallsysteme zu den bisher üblichen besteht jedoch in der verwendeten Flüssigkristallmischung.

Die erfindungsgemäßen Flüssigkristallmischungen enthalten mindestens eine Verbindung der Formel I.

Die Verbindungen der Formel I umfassen 2-, 3- und 4-kernige dielektrisch positive oder dielektrisch neutrale Verbindungen der Teilformeln I2, I3 und I4:

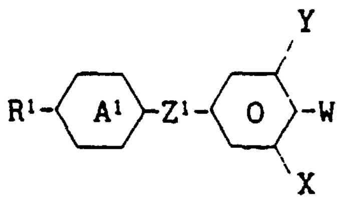

I2

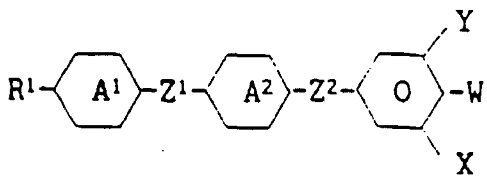

I3

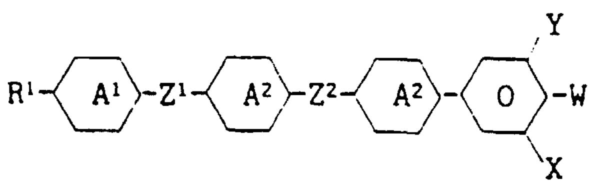

I4

In den Verbindungen der Formel I2-I4 sind X und Y unabhänig voneinander H oder F. Vorzugsweise enthalten die Verbindungen der Formeln I3 und I4 nicht mehr als 2 und insbesondere nicht mehr als 1 Heterocyclus. In den Verbindungen der Formeln I3 und I4 ist vorzugsweise eine der Brücken $Z^1$ und $Z^2$ eine Einfachbindung.

In den Verbindungen der Formel I und den Teilformeln der Verbindungen I2-I4 bedeutet $R^1$ Alkyl mit 1-12 C-Atomen, worin auch eine oder 2 nicht benachbarte $CH_2$-Gruppen durch -O- oder -CH = CH- ersetzt sein können.

Falls $R^1$ einen Alkylrest und/oder einen Alkoxyrest bedeutet, so kann dieser geradkettig oder verzweigt sein. Vorzugsweise ist er geradkettig, hat 1, 2, 3, 4, 5, 6 oder 7 C-Atome und bedeutet demnach bevorzugt Methyl, Ethyl, Propyl, Butyl, Pentyl, Hexyl, Heptyl, Methoxy, Ethoxy, Propoxy, Butoxy, Pentoxy, Hexoxy oder Heptoxy, ferner Methyl, Octyl, Nonyl, Decyl, Undecyl, Dodecyl, Octoxy, Nonoxy, Decoxy, Undecoxy oder Dodecoxy.

Oxaalkyl bedeutet vorzugsweise. geradkettiges 2-Oxapropyl (= Methoxymethyl, 2- (= Ethoxymethyl) oder 3-Oxabutyl (= 2-Methoxyethyl), 2-, 3- oder 4-Oxapentyl, 2-, 3-, 4- oder 5-Oxahexyl, 2-, 3-, 4-, 5- oder 6-Oxaheptyl, 2-, 3-, 4-, 5-, 6- oder 7-Oxaoctyl, 2-, 3-, 4-, 5-. 6-, 7- oder 8-Oxanonyl, 2-, 3-, 4-, 5-, 6- 7-, 8- oder 9-Oxadecyl.

Falls $R^1$ einen Alkylrest bedeuten. in dem ein $CH_2$-Gruppe durch -CH=CH- ersetzt ist, so kann dieser geradkettig oder verzweigt sein. Vorzugsweise ist er geradkettig und hat 2 bis 10 C-Atome. Er bedeutet demnach besonders Vinyl, Prop-1-, oder Prop-2-enyl, But-1-, 2- oder But-3-enyl, Pent-1-, 2-, 3- oder Pent-4-enyl, Hex-1-, 2-, 3-, 4- oder Hex-5-enyl, Hept-1-, 2-, 3-, 4-, 5- oder Hept-6-enyl, Oct-1-, 2-, 3-, 4-, 5-, 6- oder Oct-7-enyl, Non-1-, 2-, 3-, 4-, 5-, 6-, 7- oder Non-8-enyl, Dec-1, 2-3-, 4-, 5-, 6-, 7-, 8- oder Dec-9-enyl.

In den Verbindungen der Formel I kann der Rest $R^1$ geradkettig oder verzweigt sein; vorzugsweise ist er jedoch geradkettig. Verbindungen der Formel I mit verzweigten Alkyl- oder Alkoxyresten können gelegentlich wegen einer besseren Löslichkeit in den üblichen flüssigkristallinen Basismaterialien von Bedeutung sein, insbesondere aber als chirale Dotierstoffe, wenn sie optisch aktiv sind. Elektrooptische Systeme gemäß dem Oberbegnff von Anspruch 1, deren Flüssigkristall eine oder mehrere chirale Komponenten enthält, sind in DE 39 11 255.1 beschrieben.

Verzweigte Gruppen dieser Art enthalten in der Regel nicht mehr als eine Kettenverzweigung. Bevorzugte verzweigte Reste sind Isopropyl, 2-Butyl (= 1-Methylpropyl), Isobutyl (= 2-Methylpropyl), 2-Methylbutyl, Isopentyl (= 3-Methylbutyl), 2-Methylpentyl, 3-Methylpentyl, 2-Ethylhexyl, 2-Propylpentyl, 2-Octyl, Isopropoxy, 2-Methylpropoxy, 2-Methylbutoxy, 3-Methylbutoxy, 2-Methylpentoxy, 3-Methylpentoxy, 2-Ethylhexoxy, 2-Methylhexoxy, 2-Octyloxy, 2-Oxa-3-methylbutyl, 3-Oxa-4-methylpentyl, 4-Methylhexyl, 2-Nonyl, 6-Methyloctoxy, 2-Methyl-3-oxapentyl, 2-Methyl-3-oxahexyl.

Die Verbindungen der Formel I werden nach an sich bekannten Methoden dargestellt, wie sie in der Literatur (z.B. in den Standardwerken wie Houben-Weyl, Methoden der Organischen Chemie, Georg-Thieme-Verlag, Stuttgart Bd IX, S. 867 ff.) beschrieben sind, und zwar unter Reaktionsbedingungen, die für die genannten Umsetzungen bekannt

und geeignet sind. Dabei kann man auch von an sich bekannten, hier nicht näher erwähnten Varianten Gebrauch machen.

Der Einfachheit halber bedeuten im folgenden Cyc trans-1,4-Cyclohexylen, Phe 1,4-Phenylen, Phe.2F 2-Fluor-1,4-phenylen, Phe.3F 3-Fluor-1,4-phenylen, Phe.F2 2,3-Difluor-1,4-phenylen, Phe-3F5F 3,5-Difluor-1,4-phenylen, Phe.F 2- oder 3-Difluor-1,4-phenylen, Pyr Pyrimidin-2.5-diyl, Pyd Pyridin-2,5-diyl, Dio 1,3-Dioxan-2,5-diyl und Thp Tetrahydropuran-2,5-diyl. Durch die Akronyme Pyr, Pyd, Dio und Thp sind jeweils die beiden möglichen Stellungsisomeren umfaßt; die Bedeutung der Akronyme Phe-2Cl, Phe-3Cl, Phe-3Cl5Cl und Phe-Cl ergibt sich aus der der entsprechenden fluorierten 1,4-Phenylengruppen.

Bevorzugt sind elektrooptische Flüssigkristallsysteme, deren Flüssigkristall eine oder mehrere Verbindungen der Formel If enthält

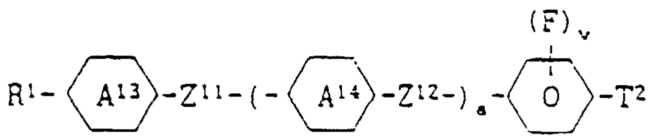

If .

worin
mindestens einer der Ringe

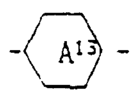

und sofern vorhanden,

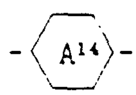

1,4-Phenylen, 2-Fluor-1,4-phenylen, 3-Fluor-1,4-phenylen, trans-1,4-Cyclohexylen, Pyridin-2,5-diyl, Pyrimidin-2,5-diyl, oder 1,3-Dioxan-2,5-diyl und der andere, sofern vorhanden, trans-1,4-Cyclohexylen, 1-4-Phenylen, 2-Fluor-1,4-phenylen oder 3-Fluor-1,4-phenylen,
$Z^{11}$ und $Z^{12}$ jeweils unabhängig voneinander eine Einfachbindung, oder $-CH_2CH_2-$,
v 0, 1 oder 2
a 0 oder 1,

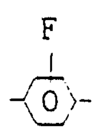

2-Fluor-1,4-phenylen oder 3-Fluor-1,4-phenylen,

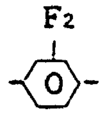

3,5-Difluor-1,4-phenylen und

$T^2$ -Cl, -F, $-CF_3$, $-OCF_3$ oder $-OCHF_2$

sind und $R^1$ die in Anspruch 1 angegebene Bedeutung hat.

Im folgenden bedeutet Phe.(F,2) eine lateral unsubstituierte 1,4-Phenylengruppe, eine lateral in 2- oder 3-Stellung monofluorierte oder eine in 3- und 5-Stellung difluorierte 1,4-Phenylengruppe.

Weiter bevorzugt sind solche Verbindungen der Formel If, in denen $T^2$ -U-F bedeutet

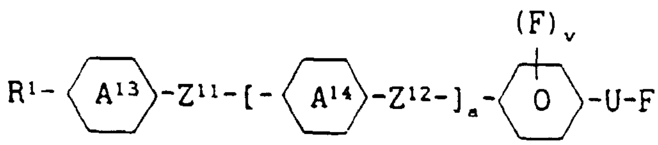 IfF

worin

U eine Einfachbindung $-CF_2-$, $-OCF_2-$ oder -OCHF- ist und $R^1$ die oben in Anspruch 1 angegebene Bedeutung hat.

Die Verbindungen der Formel IfF umfassen 2-kernige Verbindungen der Formeln IfF2-1 - IfF2-4, die bevorzugt sind:

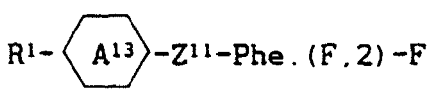 IfF2-1

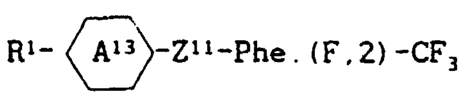 IfF2-2

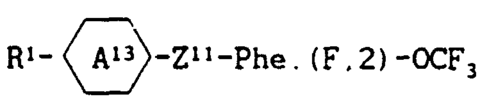 IfF2-3

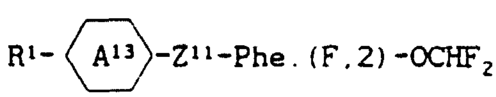 IfF2-4

In den Verbindungen der Formeln IfF2-1 - IfF2-4 bedeutet $R^1$ vorzugsweise Alkyl oder Alkoxy mit 1-10, insbesondere jedoch mit 1-8 C-Atomen, wobei die geradkettigen Reste bevorzugt sind. Weiter bevorzugt sind n-Alkoxyalkylverbindungen und insbesondere n-Alkoxymethyl- und n-Alkoxyethylverbindungen. Z11 bedeutet vorzugsweise eine Einfachbindung oder $-CH_2CH_2-$ und ganz besonders eine Einfachbindung.

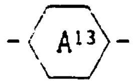

ist vorzugsweise Cyc oder Phe.(F).

Die Verbindungen der Formel IfF umfassen weiter folgende kleiner Gruppen 3-kerniger Verbindungen der Formeln IfF3-1 - IfF3-8, welche bevorzugt sind:

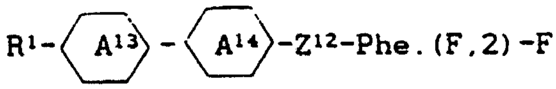 IfF3-1

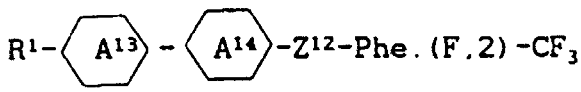 IfF3-2

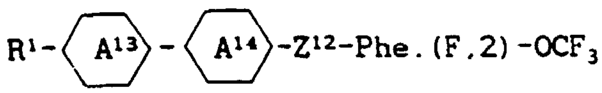 IfF3-3

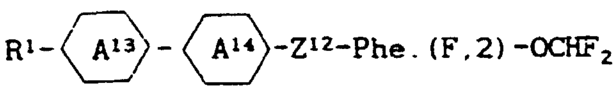 IfF3-4

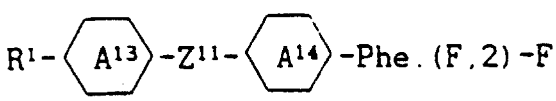 IfF3-5

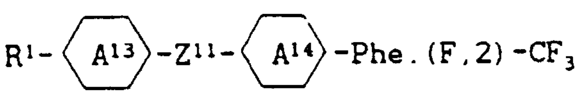 IfF3-6

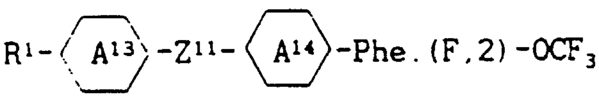 IfF3-7

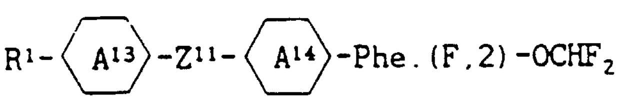 IfF3-8

In den Verbindungen der Formeln IfF3-1 - IfF3-8 bedeutet $R^1$ vorzugsweise n-Alkyl oder n-Alkoxy mit 1-10 C-Atomen, daneben auch n-Alkoxymethyl oder n-Alkoxyethyl mit 1-8 C-Atomen.

Ganz besonders bevorzugt sind Verbindungen der Formeln IfF3-1 - IfF3-8, worin $R^1$ Methyl, Ethyl, Propyl, Butyl, Pentyl, Hexyl, Heptyl, Octyl, Nonyl, Decyl, Methoxy, Ethoxy, Propoxy, Butoxy, Pentoxy, Hexoxy, Heptoxy, Octoxy, Methoxymethyl, Ethoxymethyl, Propoxymethyl, Butoxymethyl, Methoxyethyl, Ethoxyethyl oder Propoxyethyl bedeutet. $Z^{11}$ und $Z^{12}$ bedeuten in den Verbindungen der Formeln IfF3-1 - IfF3-8 vorzugsweise unabhängig voneinander -$CH_2CH_2$- oder eine Einfachbindung.

Die Verbindungen der Formel IfF werden vorzugsweise nach den in DE 31 020 17, JP 57-140 747, DE 32 33 641, DE 29 37 911, EP 0,097,033, DE 35 092 60, DE 37 32 284, DE 39 28 783, EP 0,194,153, JP 58-126 839, JP 58-210 045, WO 85/04874, DE 33 15 295, EP 0,193,191, JP 63-280 063, DE 38 25 428, DE 39 29 525, DE 40 24 760, DE 40 09 907, DE 40 07 040, DE 40 12 051, DE 39 39 116, PCT/EP 90/00186, WO 90/08757, DE 39 29 764, DE 40 04 650, DE 40 13 854 und DE 39 13 554 beschriebenen Verfahren hergestellt.

Flüssigkristallmischungen, die eine oder mehrere Verbindungen der Formeln IfF2-1 - IfF2-4 und IfF3-1 - IfF3-8 mit Phe.(F,2) = Phe.3F oder Phe.3F5F enthalten. weisen vorteilhafte Werte für die dielektrische Anisotropie $\Delta\varepsilon$ auf und sind bevorzugt.

Besonders bevorzugt sind 2-kernige Verbindungen der Formeln IfF2-1 - IfF2-4, worin Phe.(F) Phe, Phe.3F oder Phe.3F5F bedeutet. 2-kernig Verbindungen der Formeln IfF2-1 - IfF2-4, worin Phe.(F) Phe.2F bedeutet, zeichnen sich durch eine gute Mischbarkeit mit anderen Flüssigkristallen aus und sind ebenfalls besonders bevorzugt. Flüssigkristallmischungen, welche diese bevorzugten Verbindungen enthalten, sind bevorzugt.

Besonders bevorzugt sind weiter Flüssigkristallmischungen, welche eine oder mehrere der folgenden besonders bevorzugten 2-kernigen Verbindungen enthalten

| | |
|---|---|
| $R^1$-Cyc-Phe-F | IfF2-1a |
| $R^1$Cyc-Phe.2F-F | IfF2-1b |
| $R^1$-Cyc-Phe.3F-F | IfF2-1c |
| $R^1$-Cyc-Phe.3F5F-F | IfF2-1d |
| $R^1$-Cyc-$CH_2CH_2$-Phe-F | IfF2-1e |
| $R^1$-Cyc-$CH_2CH_2$-Phe.2F-F | IfF2-1f |
| $R^1$-Cyc-$CH_2CH_2$-Phe.3F-F | IfF2-1g |
| $R^1$-Cyc-$CH_2CH_2$-Phe.3F5F-F | IfF2-1h |
| R-Dio-Phe-F | IfF2-1r |
| R-Dio-Phe.2F-F | IfF2-1s |
| R-Dio-Phe.3F-F | IfF2-1t |
| R-Dio-Phe.3F5F-F | IfF2-1u |
| $R^1$-Cyc-Phe-$CF_3$ | IfF2-2a |
| $R^1$-Cyc-Phe.2F-$CF_3$ | IfF2-2b |

| | |
|---|---|
| $R^1$-Cyc-Phe.3F-$CF_3$ | IfF2-2c |
| $R^1$-Cyc-Phe.3F5F-$CF_3$ | IfF2-2d |
| $R^1$-Cyc-$CH_2CH_2$-Phe-$CF_3$ | IfF2-2e |
| $R^1$-Cyc-$CH_2CH_2$-Phe.2F-$CF_3$ | IfF2-2f |
| $R^1$-Cyc-$CH_2CH_2$-Phe.3F-$CF_3$ | IfF2-2g |
| $R^1$-Cyc-$CH_2CH_2$-Phe.3F5F-$CF_3$ | IfF2-2h |
| R-Dio-Phe-$CF_3$ | IfF2-2r |
| R-Dio-Phe.2F-$CF_3$ | IfF2-2s |
| R-Dio-Phe.3F-$CF_3$ | IfF2-2t |
| R-Dio-Phe.3F5F-$CF_3$ | IfF2-2u |
| $R^1$-Cyc-Phe-$OCF_3$ | IfF2-3a |
| $R^1$-Cyc-Phe.2F-$OCF_3$ | IfF2-3b |
| $R^1$-Cyc-Phe.3F-$OCF_3$ | IfF2-3c |
| $R^1$-Cyc-Phe.3F5F-$OCF_3$ | IfF2-3d |
| $R^1$-Cyc-$CH_2CH_2$-Phe-$OCF_3$ | IfF2-3e |
| $R^1$-Cyc-$CH_2CH_2$-Phe.2F-$OCF_3$ | IfF2-3f |
| $R^1$-Cyc-$CH_2CH_2$-Phe.3F-$OCF_3$ | IfF2-3g |
| $R^1$-Cyc-$CH_2CH_2$-Phe.3F5F-$OCF_3$ | IfF2-3h |
| R-Dio-Phe-$OCF_3$ | IfF2-3r |

| | |
|---|---|
| R-Dio-Phe.2F-$OCF_3$ | IfF2-3s |
| R-Dio-Phe.3F-$OCF_3$ | IfF2-3t |
| R-Dio-Phe.3F5F-$OCF_3$ | IfF2-3u |
| $R^1$-Cyc-Phe-$OCHF_2$ | IfF2-4a |
| $R^1$-Cyc-Phe.2F-$OCHF_2$ | IfF2-4b |
| $R^1$-Cyc-Phe.3F-$OCHF_2$ | IfF2-4c |
| $R^1$-Cyc-Phe.3F5F-$OCHF_2$ | IfF2-4d |
| $R^1$-Cyc-$CH_2CH_2$-Phe-$OCHF_2$ | IfF2-4e |
| $R^1$-Cyc-$CH_2CH_2$-Phe.2F-$OCHF_2$ | IfF2-4f |
| $R^1$-Cyc-$CH_2CH_2$-Phe.3F-$OCHF_2$ | IfF2-4g |
| $R^1$-Cyc-$CH_2CH_2$-Phe.3F5F-$OCHF_2$ | IfF2-4h |
| R-Dio-Phe-$OCHF_2$ | IfF2-4r |
| R-Dio-Phe.2F-$OCHF_2$ | IfF2-4s |
| R-Dio-Phe.3F-$OCF_3$ | IfF2-4t |
| R-Dio-Phe.3F5F-$OCF_3$ | IfF2-4u |

Weiter bevorzugt ist folgende kleiner Gruppe 3-kerniger Verbindungen:

| | |
|---|---|
| $R^1$-Phe-Phe-$Z^{12}$-Phe.(F,2)-F | IfF3-1a |
| $R^1$-Phe-Phe-$Z^{12}$-Phe.(F,2)-$CF_3$ | IfF3-2a |
| $R^1$-Phe-Phe-$Z^{12}$-Phe.(F,2)-$OCF_3$ | IfF3-3a |

$R^1$-Phe-Phe-$Z^{12}$-Phe.(F,2)-$OCHF_2$ IfF3-4a

$R^1$-Cyc-Phe-$Z^{12}$-Phe.(F,2)-F IfF3-1b

$R^1$-Cyc-Phe-$Z^{12}$-Phe.(F,2)-$CF_3$ IfF3-2b

$R^1$-Cyc-Phe-$Z^{12}$-Phe.(F,2)-$OCF_3$ IfF3-3b

$R^1$-Cyc-Phe-$Z^{12}$-Phe.(F,2)-$OCHF_2$ IfF3-4b

$R^1$-Cyc-Cyc-$Z^{12}$-Phe.(F,2)-F IfF3-1c

$R^1$-Cyc-Cyc-$Z^{12}$-Phe.(F,2)-$CF_3$ IfF3-2c

$R^1$-Cyc-Cyc-$Z^{12}$-Phe.(F,2)-$OCF_3$ IfF3-3c

$R^1$-Cyc-Cyc-$Z^{12}$-Phe.(F,2)-$OCHF_2$ IfF3-4c

$R^1$-Cyc-Dio-$Z^{12}$-Phe.(F,2)-F IfF3-1h

$R^1$-Cyc-Dio-$Z^{12}$-Phe.(F,2)-$CF_3$ IfF3-2h

$R^1$-Cyc-Dio-$Z^{12}$-Phe.(F,2)-$OCF_3$ IfF3-3h

$R^1$-Cyc-Dio-$Z^{12}$-Phe.(F,2)-$OCHF_2$ IfF3-4h

$R^1$-Phe-$Z^{11}$-Phe-Phe.(F,2)-F IfF3-5a

$R^1$-Phe-$Z^{11}$-Phe-Phe.(F,2)-$CF_3$ IfF3-6a

$R^1$-Phe-$Z^{11}$-Phe-Phe.(F,2)-$OCF_3$ IfF3-7a

$R^1$-Phe-$Z^{11}$-Phe-Phe.(F,2)-$OCHF_2$ IfF3-8a

$R^1$-Cyc-$Z^{11}$-Phe-Phe.(F,2)-F IfF3-5b

$R^1$-Cyc-$Z^{11}$-Phe-Phe.(F,2)-$CF_3$ IfF3-6b

$R^1$-Cyc-$Z^{11}$-Phe-Phe.(F,2)-$OCF_3$ IfF3-7b

$R^1$-Cyc-$Z^{11}$-Phe-Phe.(F,2)-$OCHF_2$ IfF3-8b

In diesen Verbindungen bedeutet Phe.(F,2) insbesondere Phe, Phe.3F oder Phe.3F5F. Weiter bevorzugt sind Verbindungen der Formeln IfF3-1a-1c, 2a-2c, 3a-3c und 4a-4c, IfF3-1h, IfF3-2h, IfF3-3h, IfF3-4h, in denen $Z^{12}$-$CH_2CH_2$- oder eine Einfachbindung und Phe.(F,2) Phe, Phe.2F, Phe.3F oder Phe.3F5F und insbesondere Phe, Phe.3F und Phe.3F5F bedeuten. In den Verbindungen der Formeln IfF-5a, 6a, 7a, 3a, 5b, 6b, 7b und 8b bedeutet $Z^{11}$ vorzugsweise -$CH_2CH_2$-. Flüssigkristallmischungen, die eine oder mehrere dieser bevorzugten Verbindungen enthalten, weisen besonders günstige Eigenschaften auf.

Besonders bevorzugt sind weiter Flüssigkristallmischungen, welche mindestens eine der folgenden besonders bevorzugten 3-kernigen Verbindungen enthalten:

$R^1$-Phe-Phe-Phe-F IfF3-1a1

$R^1$-Phe-Phe-Phe.2F-F IfF3-1a2

$R^1$-Phe-Phe-Phe.3F-F IfF3-1a3

$R^1$-Phe-Phe-Phe.3F5F-F IfF3-1a4

$R^1$-Phe-Phe-Phe-$CF_3$ IfF3-1a5

$R^1$-Phe-Phe-Phe.3F-$CF_3$ IfF3-1a6

$R^1$-Phe-Phe-Phe-$OCF_3$ IfF3-1a7

$R^1$-Phe-Phe-Phe.3F-$OCF_3$ IfF3-1a8

$R^1$-Cyc-Phe-Phe-F IfF3-1b1

$R^1$-Cyc-Phe-Phe-2F-F IfF3-1b2

$R^1$-Cyc-Phe-Phe.3F-F IfF3-1b3

$R^1$-Cyc-Phe-Phe.3F5F-F IfF3-1b4

$R^1$-Cyc-Phe-Phe-$CF_3$ IfF3-1b5

$R^1$-Cyc-Phe-Phe.3F-$CF_3$ IfF3-1b6

| | |
|---|---|
| $R^1$-Cyc-Phe-Phe-$OCF_3$ | IfF3-1b7 |
| $R^1$-Cyc-Phe-Phe.3F-$OCF_3$ | IfF3-1b8 |
| $R^1$-Cyc-Cyc-Phe-F | IfF3-1c1 |
| $R^1$-Cyc-Cyc-Phe.2F-F | IfF3-1c2 |
| $R^1$-Cyc-Cyc-Phe.3F-F | IfF3-1c3 |
| $R^1$-Cyc-Cyc-Phe.3F5F-F | IfF3-1c4 |
| $R^1$-Cyc-Cyc-Phe-$CF_3$ | IfF3-1c5 |
| $R^1$-Cyc-Cyc-Phe.3F-$CF_3$ | IfF3-1c6 |
| $R^1$-Cyc-Cyc-Phe-$OCF_3$ | IfF3-1c7 |
| $R^1$-Cyc-Cyc-Phe.3-$OCF_3$ | IfF3-1c8 |

Flüssigkristallmischungen, welche eine oder mehrere Verbindungen der Formeln IfF und insbesondre der bevorzugten Teilformeln enthalten, zeichnen sich durch eine breiten mesogenen Bereich, einen relativ hohen Klärpunkt, vorteilhafe Werte für die Doppelbrechung und Fließviskosität, geringe Mischbarkeit mit dem für die Matrix verwendeten Polymer und insbesondere durch vorteilhafte Werte für die dielelektrische Anisotropie und eine hohe UV- und Temperaturstabilität aus.

Die Flüssigkristallmischungen enthalten vorzugsweise 1-40 % und insbesondere 5-30 % an Verbindungen der Formel IfF und insbesondere der bevorzugten Teilformeln. Dabei weisen die Flüssigkristallmischungen vorzugsweise 1-5 und insbesondere 1-3 Verbindungen der Formel IfF und insbesondere der bevorzugten Teilforemln auf.

Weiter bevorzugt sind solche Verbindungen der Formel If, in denen $T^2$ Cl und v 0 ist

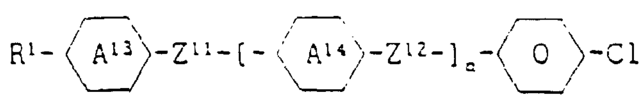

IfCl

wobei die Bedeutung von $R^1$ oben angegeben ist.

Die Verbindungen der Formel IfCl umfassen die folgenden bevorzugten 2- und 3-kernigen Verbindungen der Teilformeln Gruppe 1: IfCl2-1, IfCl2-3-IFCl2-7 und IfCl3-1 - IfCl3-5, IFCl3-7, IFCl3-10, IFCl3-12-IFCl3-14, IFCl3-21, IFCl3-25

| | |
|---|---|
| $R^1$-Phe-Phe-Cl | IfCl2-1 |
| $R^1$-Cyc-Phe-Cl | IfCl2-3 |

$R^1$-Phe-C≡C-Phe-Cl IfCl2-4

$R^1$-Phe-COO-Phe-Cl IfCl2-5

$R^1$-Phe-OOC-Phe-Cl IfCl2-6

$R^1$-Pyd-Phe-Cl IfCl2-7

$R^1$-Phe-Phe-Phe-Cl IfCl3-1

$R^1$-Cyc-Phe-Phe-Cl IfCl3-2

$R^1$-Cyc-Cyc-Phe-Cl IfCl3-3

$R^1$-Phe-Cyc-Phe-Cl IfCl3-4

$R^1$-Phe-$CH_2CH_2$-Phe-Phe-Cl IfCl3-5

$R^1$-Phe-Phe-$CH_2CH_2$-Phe-Cl IfCl3-7

$R^1$-Cyc-$CH_2CH_2$-Phe-Phe-Cl IfCl3-10

$R^1$-Cyc-Phe-$CH_2CH_2$-Cl IfCl3-12

$R^1$-Cyc-Cyc-$CH_2CH_2$-Phe-Cl IfCl3-21

$R^1$-Cyc-$CH_2CH_2$-Cyc-Phe-Cl IfCl3-25

In den Verbindungen der Formen IfCl2 und IfCl3 bedeutet $R^1$ vorzugsweise Alkyl, Alkenyl oder Alkoxy mit 1-10, insbesondere jedoch mit 1-8 C-Atomen, wobei die geradkettigen Reste bevorzugt sind. Weiter bevorzugt sind n-Alkoxyalkylverbindungen und insbesondere n-Alkoxymethyl- und n-Alkoxyethylverbindungen.

Ganz besonders bevorzugt sind verbindungen der Gruppe 1, worin $R^1$ Methyl, Ethyl, Propyl, Butyl, Pentyl, Hexyl, Heptyl, Octyl, Nonyl, Decyl, Methoxy, Ethoxy, Propoxy, Butoxy, Pentoxy, Hexoxy, Heptoxy, Octoxy, Methoxymethyl, Ethoxymethyl, Propoxymethyl, Butoxymethyl, Methoxyethyl, Ethoxyethyl oder Propoxyethyl bedeutet.

Die Verbindungen der Formel IfCl sowie der bevorzugten Teilformeln der Gruppe 1 sind größtenteils bekannt und beispielsweise beschrieben in JP 60/260679 A2, JP 59/81375 A2, EP 0 123 907, JP 58/79938 A2, DE 31 36 624, J. Malthete et al., Mol. Cryst. Liq. Cryst. 23, 233 (1973) J. Malthete et al., J. Phys. Colloq. 37, C3 1 (1976). J.P. van Meter et al., Mol. Cryst. Liq. Cryst. 22, 271 (1973), M.E. Neubert, et al., Mol. Cryst. Liq. Cryst. 135, 283 (1986), JP 56/120641 A2, EP 152014, DE 31 39 130, H.J. Müller et al., Mol. Cryst. Liq. Cryst. 92, 63 (1983), JP 61/225147 A2, JP 57/183727 A2, DE 31 39 130, G.W. Gray and J.W. Goodby, Mol. Cryst. Liq. Cryst 37, 157 (1976), JP 57/118538 A2, H. Takatsu et al., Mol. Cryst. Liq. Cryst. 100, 345 (1983), DE 32 33 641, GB 20711131, S.M. Kelly and Hp. Schad, Helv. Chim. Acta 68, 1444 (1985), US P 4,726,910, R. Dabrowski et al., Mol. Cryst. Liq. Cryst. 107, 411 (1984). JP

56/120641 A2, JP 57/31645 A2, JP 60/41638 A2, JP 59/29640 A2, DE 33 17 507, GB 20 70 593, JP 57/54148 A2, H. Takatsu et al., Mol. Cryst. Liq. Cryst. 108, 157 (1984), JP 59/113081 A2, EP 102047, J.P. van Meter, Mol. Cryst. Liq. Cryst. 22, 285 (1973), H.-J. Deutscher et al., J. Prakt. Chem. 321, 47 (1979), H.-J. Deutscher et al., J. Prakt. Chem. 321, 969 (1979), H.-J. Deutscher et al., J. Prakt. Chem. 321, 47 (1979), JP 58/47 45 A2.

Flüssigkristallmischungen, welche eine oder mehrere Verbindungen, ausgewählt aus der Gruppe der Verbindungen der Formeln IfCl und insbesondere der bevorzugten Verbindungen der Gruppe 1 enthalten, zeichnen sich durch vorteilhafte Werte für die Doppelbrechung Δn und die dielektrische Anisotropie, eine hohe Stabilität, vergleichsweise einfache Herstellbarkeit, geringe Mischbarkeit mit dem für die Matrix verwendeten Polymer und insbesondere durch einen breiten mesogenen Bereich, einen relativ hohen Klärpunkt, vorteilhafte Werte für die Fließvisikosität und die Temperaturabhängigkeit der elektrooptischen Parameter aus.

Die erfindungsgemäßen Flüssigkristallmischungen enthalten vorzugsweise 1-40 % und insbesondere 5-30 % an Verbindungen der Formel IfCl und insbesondere der bevorzugten Teilformeln; dabei weisen die Flüssigkristallmischungen vorzugsweise 1-5 und insbesondere 1-3 Verbindungen der Formel IfCl und insbesondere der bevorzugten Teilformeln auf.

Weiter bevorzugt sind solche Verbindungen der Formel If, in denen

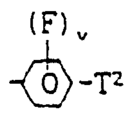

Phe.3F-Cl oder Phe.3F5F-Cl bedeutet,

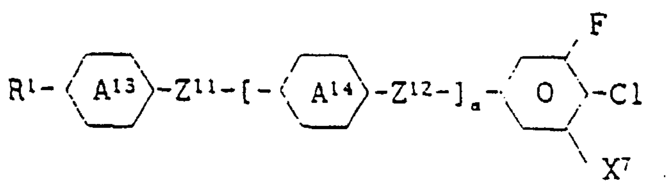

IfCl.F

wobei die Bedeutung von $R^1$ oben gegeben ist und $X^7$ F oder H ist.

Die Verbindungen der Formel IfCl.F umfassen 2- und 3-kernige Verbindungen der Formeln

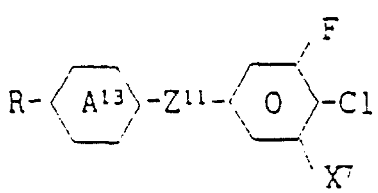

IfCl.F2

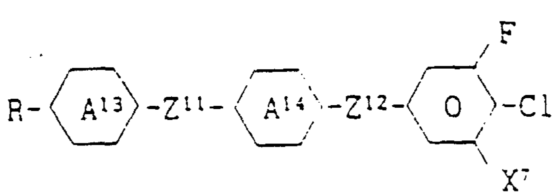

IfCl.F3

In den 2-kernigen Verbindungen der Formeln IfCl.F2 bedeutet

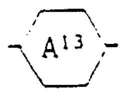

vorzugsweise Phe, Phe.F, Cyc oder Dio und insbesondere Phe, Cyc oder Dio, $Z^{11}$ ist eine Einfachbindung oder $-CH_2CH_2-$.

Die folgende kleiner Gruppe 2-kerniger Verbindungen der Formeln der Gruppe 2: IfCl.F2-1 - IfCl.F2-3, IFCl. F2-6, IFCl.F2-7, IFCl.F2-9, IFCl.F2-12, IFCl.F2-13, IFCl.F2-13, IFCl.F2-16, IFCl.F2-17 und IFCl.F2-19 ist besonders bevorzugt.

| | |
|---|---|
| R-Phe-Phe.3F-Cl | IfCl.F2-1 |
| R-Phe.3F-Phe.3F-Cl | IfCl.F2-2 |
| R-Cyc-Phe.3F-Cl | IfCl.F2-3 |
| R-Dio-Phe.3F-Cl | IfCl.F2-6 |
| R-Phe-$CH_2CH_2$-Phe.3F-Cl | IfCl.F2-7 |
| R-Cyc-$CH_2CH_2$-Phe.3F-Cl | IfCl.F2-9 |
| R-Phe-Phe.3F5F-Cl | IfCl.F2-12 |
| R-Cyc-Phe.3F5F.Cl | IfCl.F2-13 |
| R-Dio-Phe.3F5F-Cl | IfCl.F2-16 |
| R-Phe-$CH_2CH_2$-Phe.3F5F-Cl | IfCl.F2-17 |
| R-Cyc-$CH_2CH_2$-Phe.3F5F-Cl | IfCl.F2-19 |

In den 3-kernigen Verbindungen der Formeln IfCl.F3 sind $Z^{11}$ und $Z^{12}$ unabhängig voneinander eine Einfachbindung oder $-CH_2CH_2-$; eine der Brückengruppen $Z^{11}$ und $Z^{12}$ bedeutet vorzugsweise eine Einfachbindung.

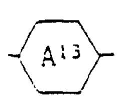 und 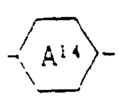

sind vorzugsweise unabhängig voneinander Phe, Phe.F, Cyc oder Dio; falls einer von

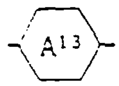 und 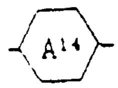

ein Heterocyclus ist, bedeutet der andere Ring vorzugsweise Phe. Phe.F oder Cyc und insesondere Phe oder Cyc.

Die folgende kleiner Gruppe 3-kerniger Verbindungen der Formeln der Gruppe 3: IfCl.F3-1 - IfClF3-4, IfCl. F3-7, IFCl.F3-8, IFCl.F3-15-IFCl.F3-19, IFCl.F3-26-IFCl.F3-28, IFCl.F3-33-IFCl.F3-35 ist besonders bevorzugt:

| | |
|---|---|
| $R^1$-Phe-Phe.F-Phe.3F-Cl | IfCl.F3-1 |
| $R^1$-Phe-Phe-Phe.3F-Cl | IfCl.F3-2 |
| $R^1$-Cyc-Phe-Phe.F-Phe.3F-Cl | IfCl.F3-3 |
| $R^1$-Cyc-Cyc-Phe.3F-Cl | IfCl.F3-4 |
| $R^1$-Dio-Cyc-Phe.3F-Cl | IfCl.F3-7 |
| $R^1$-Dio-Phe-Phe.3F-Cl | IfCl.F3-8 |
| $R^1$-Cyc-$CH_2CH_2$-Phe-Phe.3F-Cl | IfCl.F3-15 |
| $R^1$-Cyc-Cyc-$CH_2CH_2$-Phe.3F-Cl | IfCl.F3-16 |
| $R^1$-Dio-Cyc-$CH_2CH_2$-Phe.3F-Cl | IfCl.F3-17 |
| $R^1$-Dio-Phe-$CH_2CH_2$-Phe.3F-Cl | IfCl.F3-18 |
| $R^1$-Phe-Phe.F-$CH_2CH_2$-Phe.3F-Cl | IfCl.F3-19 |
| $R^1$-Phe-Phe-Phe.3F5F-Cl | IfCl.F3-26 |
| $R^1$-Cyc-Phe-Phe.3F5F-Cl | IfCl.F3-27 |
| $R^1$-Cyc-Cyc-Phe.3F5F-Cl | IfCl.F3-28 |
| $R^1$-Dio-Phe-Phe.3F5F-Cl | IfCl.F3-33 |

$R^1$-Cyc-$CH_2CH_2$-Phe-Phe.3F5F-Cl IfCl.F3-34

$R^1$-Cyc-Cyc-$CH_2CH_2$-Phe.3F5F-Cl IfCl.F3-35

In den Verbindungen der Formeln IfCl.F und insbesondere der bevorzugten Teilformeln der Gruppe 2 und Gruppe 3 bedeutet $R^1$ vorzugsweise Alkyl, Alkoxy, Alkoxyalkyl und Alkenyl mit 1 - 10 C-Atomen. Besonders bevorzugt bedeutet $R^1$ Methyl. Ethyl, Propyl, Butyl, Pentyl, Hexyl, Heptyl, Octyl, Nonyl, Decyl, Methoxy, Ethoxy, Propoxy, Butoxy, Pentoxy, Hexoxy, Heptoxy, Octoxy, Nonoxy, Decoxy, Methoxyethyl, Ethoxyethyl oder Propoxyethyl.

Die Verbindungen der Formel IfCl.F2 und IfCl.F3 werden vorzugsweise nach den in DE 39 29 525 beschriebenen Verfahren hergestellt.

Flüssigkristallmischungen, welche eine oder mehrere Verbindungen, ausgewählt aus der Gruppe der Verbindungen der Formel IfCl.F und insbesondere der Formeln der Gruppe 2 und der Gruppe 3 enthalten, sind durch vorteilhafte Werte für die Doppelbrechung, den Klärpunkt und die Viskosität und insbesondere durch vorteilhafe Werte für $\Delta\varepsilon$, eine hohe UV- und Temperaturstabilität und einen hohen spezifischen Widerstand gekennzeichnet. Diese Mischungen sind bevorzugt.

Die Flüssigkristallmischungen enthalten vorzugsweise 1-40 % und insbesondere 5-30 % an Verbindungen der Formel IfCl.F und insbesondere der bevorzugten Teilformeln. Dabei weisen die Flüssigkristallmischungen vorzugsweise 1-5 und insbesondere 1-3 Verbindungen der Formel IfCl.F und insbesondere der bevorzugten Teilformeln auf.

Der Fachmann kann jederzeit ohne erfinderisches Zutun aus der begrenzten Gruppe der Verbindungen der Formel IfCl.F und insbesondere aus der kleineren Gruppe der Verbindungen der Formeln der Gruppe 2 und der Gruppe 3 so auswählen, daß der Flüssigkristall und das damit befüllte elektrooptische System im Hinblick auf die jeweilige Anwendung innerhalb gewisser Grenzen optimiert wird. Soll die Flüssigkristallmischung z.B. eine hohe oder sogar sehr hohe Doppelbrechung aufweisen, wird der Fachmann vorzugsweise solche Verbindungen der Formeln IfCl.F und insbesondere der bevorzugten Teilformeln auswählen, die keine gesättigten Ringsysteme aufweisen, wie z.B. die Verbindungen der Formeln IfCl.F2-1 IfCl.F2-2, IfCl-F2-7, IfCl.F2-12, IfCl.F2-17, IfCl.F3-1, IfCl.F3-2, IfCl.F3-19, IfCl.F3-26 und IfCl.F3-36.

Weiter können z.B. für Mischungen, welche ein relativ hohes oder hohes $\Delta\varepsilon$ aufweisen sollen, vorteilhaft Verbindungen verwendet werden, die einen Pyridin- oder Pyrimidinring und/oder eine Phe.3F5F-Cl-Gruppe aufweisen.

Weiter bevorzugt sind Flüssigkristallmischungen, die neben einer dielektrisch positiven Komponente A bestehend aus dielektrisch positiven Verbindungen mit $\Delta\varepsilon > 2$, eine dielektrisch neutrale Komponente B, bestehend aus Verbindungen mit $-2 \leqq \Delta\varepsilon \leqq +2$, und gegebenenfalls eine dielektrisch negative Komponente C, bestehend aus Verbindungen mit $\Delta\varepsilon < -2$, enthält.

Wird der Massenanteil der dielektrisch positiven Verbindungen an den Flüssigkristall mit a, der der dielektrisch neutralen mit b und der der dielektrisch negativen entsprechend mit c bezeichnet, so ist a ≧ 30 % und insbesondere a > 50 %. Beruht die dielektrisch positive Komponente A insbesondere auf Carbonitrilen, enthält der Flüssigkristall vorzugsweise eine dielektrisch neutrale Komponente, um die Bildung von Dimeren mit antiparallel korrelierten Dipolmomenten zu unterdrücken. Der Quotient aus dem Massenanteil von dielektrisch positiver und neutraler Komponente ist vorzugsweise

$$35 \geqq \frac{a}{b} \geqq 0,5$$

und insbesondere

$$15 \geqq \frac{a}{b} \geqq 1$$

Beruht der Flüssigkristall dagegen überwiegend auf Flüssigkristallverbindungen, die als polare terminale Gruppe F, Cl, CF3, OCF3 oder OCHF2 enthalten, kann der Anteil dielektrisch neutraler Verbindungne klein oder auch 0 sein; vorzugsweise ist b ≦ 45 %, insbesondere b ≦ 35 % und ganz besonders b ≦ 25 %.

Der Anteil dielektrisch negativer Verbindungen ist im allgemeinen klein, da üblicherweise geringe Schaltspannungen erwünscht sind. Vorzugsweise ist c ≦ 10 % und insbesondere c ≦ 5 %; Flüssigkristallmischungen mit c ≦ 3 % sind im allgemeinen besonders bevorzugt.

Bevorzugt sind Flüssigkristalle, die eine oder mehrere dielektrisch neutrale Verbindungen der Formel Ig enthalten

$$R^1\text{-}Q^4\text{-COO-}Q^5\text{-}R^2 \qquad Ig$$

worin die Reste $Q^4$ und $Q^5$ jeweils unabhängig voneinander

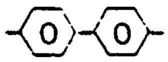, 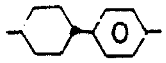, 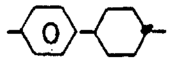 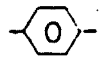, 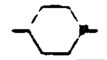, oder 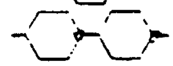

und einer von $Q^4$ und $Q^5$ auch

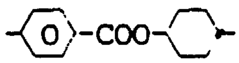 oder 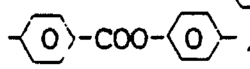, 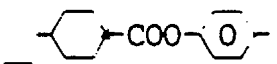,

sind und R1 und R2 jeweils unabhängig voneinander die in Anspruch 1 für $R^1$ gegebene Bedeutung haben.

Die Verbindungen der Formel Ig umfassen 2-kernige Verbindungen der Formel Ig2-1 und Ig2-2 die bevorzugt sind:

$$R^1\text{Phe-COO-Phe-}R^2 \qquad Ig2\text{-}1$$

$$R^1\text{-Cyc-COO-Phe-}R^2 \qquad Ig2\text{-}2$$

In den Verbindungen der Formeln Ig2-1 und Ig2-2 bedeuten $R^1$ und $R^2$ unabhängig voneinander vorzugsweise Alkyl oder Alkoxy mit 1-10, insbesondere jedoch mit 1-8 C-Atomen, weiter auch n-Alkoxyalkyl und insbesondere n-Alkoxymethyl und n-Alkoxyethyl. Eine der beiden 2,4-Phenylengruppen der Verbindungen der Formel Ig2-1 und die 1,4-Phenylengruppe der Verbindung der Formel Ig2-2 kann in 2- oder 3-Stellung durch Cl oder F, insbesondere jedoch durch F und/oder in 3-Stellung sübstituiert sein.

Besonders bevorzugt sind die Verbindungen der Formeln

$$R^1\text{-Phe-COO-Phe-Alkyl oder Alkoxy} \qquad Ig2\text{-}1a$$

$$R^1\text{-Phe-COO-Phe.3F-Alkyl oder Alkoxy} \qquad Ig2\text{-}1b$$

$$R^1\text{-Phe-COO-Phe.2F-Alkyl oder Alkoxy} \qquad Ig2\text{-}1c$$

$$R^1\text{-Phe-COO-Phe.3F-Alkoxymethyl} \qquad Ig2\text{-}1d$$

$$R^1\text{-Cyc-COO-Phe-Alkyl oder Alkoxy} \qquad Ig2\text{-}2a$$

$R^1$-Cyc-COO-Phe.2F-Alkyl oder Alkoxy Ig2-2b

$R^1$-Cyc-COO-Phe.3F-Alkyl oder Alkoxy Ig2-2c

Die Verbindungen der Formel Ig umfassen weiter 3-kernige Verbindungen, in denen einer der Reste $Q^1$ oder $Q^2$ 1,4-Phenylen oder trans-1,4-Cyclohexylen ist und der andere

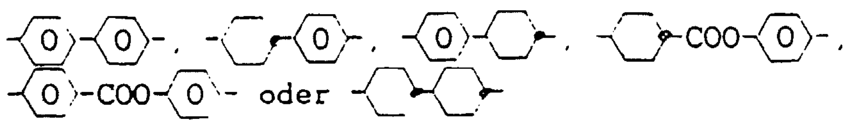
, , , , oder

ist.

Bevorzugt sind die Verbindungen der Formeln

$R^1$-Phe-COO-Phe.(F)-Phe.$R^2$ Ig3-1

$R^1$-Phe-Phe-COO-Phe.(F).$R^2$ Ig3-2

$R^1$-Cyc-Phe.(F)-COO-Phe.(F)-$R^2$ Ig3-3

$R^1$-Cyc-COO-Phe-COO-Phe.(F)-$R^2$ Ig3-4

$R^1$-Phe-COO-Phe.(F)-COO-Phe-$R^2$ Ig3-5

$R^1$-Cyc-Cyc-COO-Phe.(F)-$R^2$ Ig3-6

$R^1$-Phe-COO-Cyc-Cyc-$R^2$ Ig3-7

$R^1$-Cyc-OCO-Phe-Cyc-$R^2$ Ig3-8

$R^1$-Cyc-COO-Phe.(F)-Phe-$R^2$ Ig3-9

$R^1$-Phe.(F)-Phe-COO-Cyc-$R^2$ Ig3-10

In den Verbindungen der Teilformeln Ig3-1 - Ig3-10 bedeuten $R^1$ und $R^2$ vorzugsweise unabhängig voneinander n-Alkyl oder n-Alkoxy mit 1-10 C-Atomen, daneben auch n-Alkoxymethyl oder n-Alkoxyethyl mit 1-8 C-Atomen. Die Verbindungen der Formel Ig3-1 - Ig3-10 können an einer der 1,4-Phenylengruppen durch X = F lateral monosubstituiert sein, wobei eine Substitution in 3-Stellung bevorzugt ist.

Ganz besonders bevorzugt sind lateral un- oder monosübstituierte Verbindungen der Formeln Ig3-1, Ig3-2, Ig3-3, Ig3-5, Ig3-6, Ig3-8, Ig3-9 und Ig3-10, worin $R^1$ und $R_2$ unabhängig voneinander Methyl, Ethyl, Propyl, Butyl, Pentyl, Hexyl, Heptyl, Octyl, Methoxy, Ethoxy, Propoxy, Butoxy, Pentoxy, Hexoxy, Methoxymethyl, Ethoxymethyl, Propoxymethyl, Butoxymethyl, Pentoxymethyl, Methoxyethyl, Ethoxyethyl, Propoxyethyl, Butoxyethyl oder Pentoxyethyl bedeuten.

Die Verbindungen der Formel Ig umfassen weiter 4-kernige Verbindungen, in denen die Reste $Q^1$ und $Q^2$ jeweils unabhängig voneinander

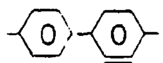, 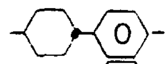, 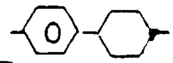, 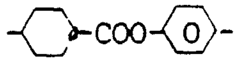, 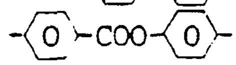 oder 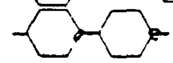

bedeuten.

Bevorzugt sind die Verbindungen der Formeln Ig4-1 - Ig4-10

$R^1$-Phe-Phe-COO-Phe.(F)-Phe-$R^2$ Ig4-1

$R^1$-Phe.(F)-Phe-COO-Cyc-Phe-$R^2$ Ig4-2

$R^1$-Phe-Phe.(F)-COO-Phe-COO-Phe-$R^2$ Ig4-3

$R^1$-Phe-Phe.(F)-COO-Cyc-Cyc-$R^2$ Ig4-4

$R^1$-Cyc-Phe-COO-Phe.(F)-Phe-$R^2$ Ig4-5

$R^1$-Cyc-Phe-COO-Phe.(F)-COO-Phe.(F)-$R^2$ Ig4-6

$R^1$-Cyc-Phe-COO-Cyc-Cyc-$R^2$ Ig4-7

$R^1$-Cyc-Phe.(F)-COO-Phe-Cyc-$R^2$ Ig4-8

$R^1$-Cyc-Cyc-COO-Phe-Cyc-$R^2$ Ig4-9

$R^1$-Cyc-COO-Phe-COO-Phe.(F)-Phe-$R^2$ Ig4-10

$R^1$ und $R^2$ bedeuten in den Verbindungen der Formeln Ig4-1 - Ig4-10 vorzugsweise unabhängig voneinander Methyl, Ethyl, Propyl, Butyl, Pentyl, Hexyl, Heptyl, Octyl, Nonyl, Decyl, Methoxy, Ethoxy, Propoxy, Butoxy, Pentoxy, Hexoxy, Heptoxy, Octoxy, Methoxymethyl, Ethoxymethyl, Propoxymethyl, Butoxymethyl, Methoxyethyl. Ethoxyethyl oder Propoxyethyl, Besonders bevorzugt sind die terminal symmetrisch substituierten Verbindungen der Formel Ig4-1, Ig4-3, Ig4-4 und Ig4-8. Die Verbindungen der Formel Ig4-1 - Ig4-10 können an einer der 1,4-Phenylengruppen durch F oder Cl lateral monosubstituiert sein, wobei eine Substitution durch F in 2- oder 3-Stellung bevorzugt ist. Bevorzugt sind weiter die Verbindungen der Formel Ig4-9.

Die Verbindungen der Formel Ig werden vorzugweise hergestellt durch Veresterung entsprechend substituierter Phenole oder Phenolate mit entsprechend substituierten Carbonsäuren oder reaktiven Carbonsäurederivaten. wie dies z.B. in DE 21 67 252, DE 28 00 553, DE 25 36 046, DE 21 23 175 und DE 21 39 628 beschrieben ist.

Flüssigkristallmischungen, welche eine oder mehrere Verbindungen, ausgewählt aus der Gruppe der Verbindungen der Formel Ig und insbesondere der bevorzugten Teilformeln Ig2-1, Ig2-2, Ig2-1a-1d, Ig2-2a-2c, Ig3-1 - Ig3-10 und Ig4-1 - Ig4-10, enthalten, zeichnen sich durch vorteilhafte Werte für die dielektrische Anisotropie $\Delta\varepsilon$, eine hohe Stabilität, leichte Herstellbarkeit, geringe Mischbarkeit mit dem für die Matrix verwendeten Polymer und insbesondere durch einen breiten mesogenen Bereich, einen relativ hohen Klärpunkt und vorteilhafte Werte für die Doppelbrechung und Fließviskosität aus.

Die Flüssigkristallmischungen enthalten vorzugsweise 1-40 % und insbesondere 5-30 % an Verbindungen der Formel Ig und insbesondere der bevorzugten Teilformeln. Dabei weisen die Flüssigkristallmischungen vorzugsweise 1-5 und insbesondere 1-3 Verbindungen der Formel Ig und insbesondere der bevorzugten Teilformeln auf.

Flüssigkristallmischungen, welche auf Teilmischungen basieren, die aus mindestens einer lateral unsubstituierten Verbindung der Formel Ig2-1 und aus einer oder mehreren Verbindungen der Formel IV1 bestehen, sind für Matrixsysteme sehr, hingegen für Netzwerksysteme weniger bevorzugt. Allerdings sind Flüssigkristallmischungen, welche zusätzlich zu den Verbindungen dieser Formeln mindestens eine Verbindung, ausgewählt aus der Gruppe der Verbindungen der Formeln IfF, IfCl, IfCl.F, oder Ii und insbesondere der bevorzugten Unterformeln, enthalten, i.a. auch für Netzwerksysteme bevorzugt.

Flüssigkristallmischungen, welche auf den folgenden Teilmischungen T (Ig) 4-6 basieren, welche mindestens je eine Verbindung aus den Verbindungsklassen der jeweils aufgeführten Formeln enthalten, sind bevorzugt. In der Tabelle ist zusätzlich der bevorzugte Massenanteil dieser Verbindungen an den Teilmischungen angegeben. Die Teilmischungen enthalten 2-38, vorzugsweise 2-35 und insbesondere 2-25 Verbindungen; die Summe der Massenanteile dieser Verbindungen an der Teilmischung beträgt 100 %. Der Massenanteil der Teilmischung an dem erfindungsgemäßen Flüssigkristall beträgt zwischen 10 % und 100 %, insbesondere zwischen 15 % und 100 % und ganz besonders zwischen 25 % und 100 %.

Weiter bevorzugt sind Flüssigkristallmischungen, welche eine oder mehrere Verbindungen der Formel Ii enthalten

$$R^1\text{-}Q^8\text{-}CH_2CH_2\text{-}Q^9\text{-}R^2 \qquad \text{Ii}$$

worin

$R^1$ und $R^2$ jeweils unabhängig voneinander die in Anspruch 1 gegebene Bedeutung haben, und die Reste $Q^8$ und $Q^9$ jeweils unabhängig voneinander trans-1,4-Cyclohexylen, 1,4-Phenylen, 4,4'-Biphenylyl, 4,4'-Cyclohexylphenyl, 4,4'-Phenylcyclohexyl oder trans-,trans-4,4'-Bicyclohexylyl, wobei einer der im Molekül vorhandenen 1,4-Phenylenreste auch durch Fluor oder Chlor substituiert sein kann,

bedeuten.

Die Verbindungen der Formel Ii umfassen 2-kernige Verbindungen der Formeln Ii2-1 und Ii2-2, die bevorzugt sind:

$$R^1\text{-Phe-}CH_2CH_2\text{-Phe-}R^2 \qquad \text{Ii2-1}$$

$$R^1\text{-Cyc-}CH_2CH_2\text{-Phe-}R^2 \qquad \text{Ii2-2}$$

$R^1$ und $R^2$ bedeuten in den Verbindungen der Formeln Ii2 unabhängig voneinander vorzugsweise Alkyl oder Alkoxy mit 1-10, insbesondere jedoch mit 1-8 C-Atomen. Weiter bevorzugt sind n-Alkoxyalkylverbindungen und insbesondere n-Alkoxymethyl- und n-Alkoxyethylverbindungen. Eine der beiden 1,4-Phenylengruppen kann in 2- oder 3-Stellung durch Cl oder F, insbesondere jedoch durch F und/oder in 3-Stellung substituiert sein.

Besonders bevorzugt sind die Verbindungen der Formel

$$\text{Alkyl- oder Alkoxy-Phe-}CH_2CH_2\text{-Phe-}R^2 \qquad \text{Ii2-1a}$$

$$\text{Alkyl- oder Alkoxy-Phe.3F-}CH_2CH_2\text{-Phe-}R^2 \qquad \text{Ii2-1b}$$

$$\text{Alkoxymethyl-Phe.2F-}CH_2CH_2\text{-Phe-}R^2 \qquad \text{Ii2-1c}$$

Alkyl- oder Alkoxy-Cyc-$CH_2CH_2$-Phe-$R^2$ Ii2-2a

Die Verbindungen der Formel I umfassen weiter 3-kernige Verbindungen der Teilformeln Ii3, von denen die der Teilformeln Ii3-1 - Ii3-5 bevorzugt sind:

$R^1$-Phe-$CH_2CH_2$-Phe-Phe-$R^2$ Ii3-1

$R^1$-Cyc-$CH_2CH_2$-Phe-Phe-$R^2$ Ii3-2

$R^1$-Phe-$CH_2CH_2$-Phe-Cyc-$R^2$ Ii3-3

$R^1$-Phe-Cyc-$CH_2CH_2$-Phe-$R^2$ Ii3-4

$R^1$-Cyc-$CH_2CH_2$-Phe-Cyc-$R^2$ Ii3-5

$R^1$-Cyc-Cyc-$CH_2CH_2$-Phe-$R^2$ Ii3-6

In den Verbindungen der formeln Ii3-1 - Ii3-6 bedeuten $R^1$ und $R^2$ vorzugsweise unabhängig voneinander n-Alkyl oder n-Alkoxy mit 1-10 C-Atomen daneben auch n-Alkoxymethyl oder n-Alkoxyethyl mit 1-8 C-Atomen. Die Verbindungen der Formel Ii3-1 - Ii3-6 können an einer der 1,4-Phenylengruppen durch X = F oder Cl lateral monosubstituiert sein. Besonders bevorzgt sind die lateral unsubstituierten Verbindungen der Formeln Ii3-1 - Ii3-6 und die lateral monosubstituierten Verbindungen der Formeln Ii3-1a-1b, Ii3-2a, Ii3-3a, Ii3-6a und Ii3-5a, wobei Phe.X eine in 2- oder 3-Stellung durch F oder Cl lateral monosubsitutierte 1,4-Phenylengruppe bedeutet:

$R^1$-Phe-$CH_2CH_2$-Phe-Phe.3X-$R^2$ Ii3-1a

$R^1$-Phe-$CH_2CH_2$-Phe.X-Phe-$R^2$ Ii3-1b

$R^1$-Cyc-$CH_2CH_2$-Phe-Phe.2X-$R^2$ Ii3-2a

$R^1$-Phe-$CH_2CH_2$-Phe.X-Cyc-$R^2$ Ii3-3a

$R^1$-Cyc-$CH_2CH_2$-Phe.2F-Cyc-$R^2$ Ii3-5a

$R^1$-Cyc-Cyc-$CH_2CH_2$-Phe.F-$R^2$ Ii3-6a

Die lateral monosubstituierten Verbindungen der Formeln Ii3-1 - Ii3-6 zeichnen sich in der Regel durch eine niedrigere Fließviskosität aus als die entsprechenden unsubstituierten Verbindungen.

Die Verbindungen der Formel Ii umfassen weiter 4-kernige Verbindungen, in denen $Q^8$ und $Q^9$ jeweils unabhängig voneinander

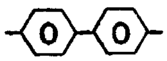, 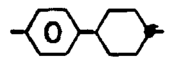, 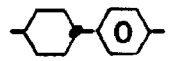 oder 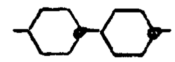

bedeuten:

$R^1$-Phe-Phe-$CH_2CH_2$-Phe.(F)-Phe-$R^2$ Ii4-1

$R^1$-Phe-Phe-$CH_2CH_2$-Phe.(F)-Cyc-$R^2$ Ii4-2

$R^1$-Phe-Cyc-$CH_2CH_2$-Phe.(F)-Phe.(F)-$R^2$ Ii4-3

$R^1$-Phe-Cyc-$CH_2CH_2$-Phe.(F)-Cyc-$R^2$ Ii4-4

$R^1$-Cyc-Phe.(F)-$CH_2CH_2$-Phe-Cyc-$R^2$ Ii4-5

$R^1$-Cyc-Cyc-$CH_2CH_2$-Phe.(F)-Phe-$R^2$ Ii4-6

$R^1$ und $R^2$ bedeuten in den Verbindungen der Formeln Ii4-1 - Ii4-6 vorzugsweise unabhängig voneinander Methyl, Ethyl, Propyl, Butyl, Pentyl, Hexyl, Heptyl, Octyl, Nonyl, Decyl, Methoxy, Ethoxy, Propoxy, Butoxy, Pentoxy, Hexoxy, Heptoxy, Octoxy, Methoxymethy, Ethoxymethyl, Propoxymethyl, Butoxymethyl, Methoxymethyl, Ethoxyethyl oder Propoxyethyl. Die Verbindungen der Formeln Ii4-1 - Ii4-6 können an einer der 1,4-Phenylengruppen durch F oder Cl lateral monosubstituiert sein, wobei eine Substitution in 3-Stellung bevorzugt ist. Diese monosübstituierten vierkernigen Verbindungen zeichnen sich durch einen hohen Klärpunkt und eine vergleichsweise niedrige Fließviskosität η aus.

Die Verbindungen der Formel Ii werden vorzugsweise nach den in EP 0,084,194, JP 61-087777, GB 2,201,415 und DE 32 37 367 beschriebenen Methoden hergestellt.

Flüssigkristallmischungen, welche eine oder mehrere Verbindungen, ausgewählt aus der Gruppe der Verbindungen der Formel Ii und insbesondere der bevorzugten Formeln Ii2-1, Ii2-2, Ii2-1a-1c, Ii2-2a, Ii3-1 - Ii3-5, Ii3-1a-1b, Ii3-2a, Ii3-6a, Ii3-3a, Ii3-5a und Ii4-1 - Ii4-5 enthalten, zeichnen sich durch eine hohe Stabilität, geringe Mischbarkeit mit dem für die Matrix verwendeten Polymer und insbesondere durch einen breiten mesogenen Bereich, einen relativ hohen Klärpunkt und vorteilhafte Werte für die optische Anisotropie Δn und die Fließvisikosität η aus.

Die Flüssigkristallmischungen enthalten vorzugsweise 1-40 % und insbesondere 5-30 % an Verbindungen der Formel Ii und insbesondere der bevorzugten Teilformeln. Dabei weisen die Flüssigkristallmischungen vorzugsweise 1-5 und insbesondere 1-3 Verbindugen der Formel Ii und insbesondere der bevorzugten Teilformeln auf.

Besonders bevorzugt sind Flüssigkristallmischungen, welche mindestens eine Verbindung, ausgewählt aus der Gruppe der Verbindungen der Formel Ii und insbesondere der bevorzugten Teilformeln, und zusätzlich eine oder mehrere Verbindungen, ausgewählt aus der Gruppe der Verbindungen der Formeln II1-II28, III1-III3 und IV1-IV8, enthalten. Der Massenanteil der aus mindestens einer Verbindung der Formel Ii und insbesondere der bevorzugten Teilformeln und weiter aus mindestens einer Verbindung der Formeln III-II28, III1-III3 und IV1-IV8 bestehenden Teilmischung an den erfindungsgemäß verwendeten Flüssigkristallmischungen beträgt vorzugsweise 15 %-100 %, insbesondere jedoch 25 %-100 %. Diese Teilmischungen sind für Netzwerk- und Matrixsysteme bevorzugt.

Die erfindungsgemäßen Flüssigkristallmischungen enthalten eine oder mehrere Verbindungen, welche aus der Gruppe der Verbindungen der Formel I und insbesondere der Formeln Ia-Ii ausgewählt werden; dabei sind Flüssigkristallmischungen, die neben einer oder mehreren Verbindungen der Formel I und insbesondere der Formeln Ia-Ii, zusätzlich eine oder mehrere Verbindungen, ausgewählt aus der Gruppe der Verbindungen der Formeln II-IV, aufweisen, im allgemeinen bevorzugt.

Bevorzugt sind weiter Flüssigkristallmischungen, welche mindestens je eine Verbindung aus 2 verschiedenen Verbindungsklassen; ausgewählt aus der Gruppe der Verbindungsklasen der Formeln Ia-Ii, enthalten.

Flüssigkristallmischungen, welche auf den folgenden Teilmischungen T (Ii) 9-13 basieren, welche mindestens je eine Verbindung aus den Verbindungsklassen der jeweils aufgeführten Formeln enthalten, sind bevorzugt. In der

Tabelle ist zusätzlich der bevorzugte Massenanteil dieser Verbindungen an den Teilmischungen angegeben. Die Teilmischungen enthalten 2-38, vorzugsweise 2-35 und insbesondere 2-25 Verbindungen; die Summe der Massenanteile dieser Verbindungen an der Teilmischung beträgt 100 %. Der Massenanteil der Teilmischung an dem erfindungsgemäßen Flüssigkristall beträgt zwischen 10 % und 100 %, insbesondere zwischen 15 % und 100 % und ganz besonders zwischen 25 % und 100 %.

Der Fachmann kann aus dieser begrenzten Gruppe bevorzugter Teilmischungen T(I)1-T(I)22 ohne weiteres eine Auswahl derartig treffen, daß die Flüssigkristallmischung im Hinblick auf die jeweilig Anwendung optimiert wird. So weist z.B. T(I)1 eine besonders hohe dielektrische Anisotropie auf, während die Teilmischung T(I)16-T(I)18 eine besonders hohe Stabilität aufweisen und die Teilmischungen T(I)4, T(I)-11 und T(I)19 durch relativ hohe Klärpunkte gekennzeichnet sind. Die Auswahl geeigneter Teilmischungen bereitet dem Fachmann keine Schwierigkeiten und erfordert kein erfinderisches Zutun.

Die erfindungsgemäßen Flüssigkristalle können neben den erfindungsgemäßen Verbindungen der Formel I und insbesondere der bevorzugten Teilformeln und ganz besonders der bevorzugten Flüssigkristallmischungen weitere Bestandteile enthalten, die vorzugsweise ausgwählt werden aus nematischen oder nematogenen (monotropen oder isotropen) Substanzen, insbesondere Substanzen aus den Klassen der Azoxybenzole, Benzylidenaniline, Biphenyle, Terphenyle, Phenyl- oder Cyclohexylbenzoate, Cyclohexancarbonsäurephenyl- oder Cyclohexylester, Phenyl- oder Cyclohexylester der Cyclohexylbenzoesäure, Phenyl- oder Cyclohexylester der Cyclohexylcyclohexancarbonsäure, Cyclohexylphenylester der Benzoesäure, der Cyclohexancarbonsäure, bzw. der Cyclohexylcyclohexancarbonsäure, Phenylcyclohexane, Cyclohexylbiphenyle, Phenyl cyclohexylcyclohexane, Cyclohexylcyclohexane, Cyclohexylcyclohexene, Cyclohexylcyclohexylcyclohexene, 1,4-Bis-cyclohexylbenzole, 4,4'-Bis-cyclohexylbiphenyle, Phenyl- oder Cycxlohexylpyrimidine, Phenyl- oder Cyclohexylpyridine, Phenyl- oder Cyclohexyldioxane, Phenyl- oder Cyclohexyl-1,3-dithiane, 1,2-Dipheylethane, 1,2-Dicyclohexylethane, 1-Phenyl-2-cyclohexylethane, 1-Cyclohexyl-2-(4-phenylcyclohexyl)-ethane, 1-Cyclohexyl-2-biphenylylethane, 1-Phenyl-2-cyclohexylphenylethane, gegebenenfalls halogenierten Stilbene, Benzylphenylether, Tolane und substituierten Zimtsäuren. Die 1,4-Phenylengruppen in diesen Verbindungen können auch fluoriert sein.

In diesen Verbindungen bedeuten die beiden terminalen Gruppen vorzugsweise jeweils unabhängig voneinander Alkyl, Alkenyl, Alkoxy, Alkenyloxy oder Alkanoyloxy mit bis zu 8 Kohlenstoffatomen. Bei den meisten dieser Verbindungen sind R' und R" voneinander verschieden, wobei einer dieser Reste meist Alkyl oder Alkenyl ist.

Es ist aber auch möglich, daß eine und/oder beide terminale Gruppen einen polaren Rest -CN, -NCS, -F, -Cl, oder $(O)_iCX_kH_{3-k}$ bedeuten. wobei i 0 oder 1, k 1, 2 oder 3 und X F oder Cl ist. Bedeutet nur eine der terminalen Gruppen einen der angegebenen polaren Reste, ist die andere vorzugsweise Alkyl oder Alkenyl.

Viele solcher Substanzen oder auch Gemische davon sind im Handel erhältlich. Alle diese Substanzen sind nach literaturbekannten Methoden oder in Analogie dazu erhältlich.

Die in den erfindungsgemäßen elektrooptischen Flüssigkristall-Systemen verwendeten Flüssigkristalle enthalten vorzugsweise 1 %-100 %, insbesondere 10 %-100 % und ganz besonders 20 %-100 % an Verbindungen der Formel I. Dabei sind Flüssigkristallmischungen bevorzugt, welche 1-20 und insbesondere 1-15 Verbindungen der Formel I enthalten. Wenn die Flüssigkristallverbindungen der Formel I aus nur einer Untergruppe der Formeln Ia-Ii ausgewählt sind, enthält die Fiüssigkristallmischung vorzugsweise 1-5 und insbesondere 1-3 Verbindungen dieser Teilformel von Formel I.

Die dielektrische Anisotropie der verwendeten Fiüssigkristallmischung ist positiv $\Delta\varepsilon > 0$ und vorzugsweise $\Delta\varepsilon > 3$.

Für kleinere Werte der dielektrischen Anisotropie $\Delta\varepsilon$ werden sehr hohe Schwellenspannungen beobachtet. Besonders bevorzugt sind Werte $\Delta\varepsilon > 5$, ganz besonders $\Delta\varepsilon > 8$.

Es wurde gefunden, daß Flüssigkristallmischungen, welche auf mittelpolaren Verbindungen mit

$$3 \leqq \Delta\varepsilon \leqq 20 \qquad (*1)$$

und insbesondere

$$3 \leqq \Delta\varepsilon \leqq 15 \qquad (*2)$$

basieren, besonders vorteilhafte Eigenschaften und insbesondere eine hohe Temperatur- und UV-Stabilität und einen hohen spezifischen Widerstand aufweisen. Derartige Mischungen sind besonders für Systeme mit hohem Informationsgehalt geeignet, die mit aktiver oder passiver Matrix angesteuert werden, und weiter insbesondere auch für Systeme, die relativ hohe Betriebstemperaturen tolerieren müssen (z.B. Systeme für out-door-Anwendungen). Der Massenanteil mittelpolarer Verbindungen an der Flüssigkristallmischung ist vorzugsweise nicht kleiner als 50 %, insbesondere

mindestens 60 % und ganz besonders mindestens 65 %.

Es hat sich gezeigt, daß insbesondere Verbindungen der Formel I mit W = -F, -Cl, $-CF_3$, $-OCF_3$ oder $-OCHF_2$ häufig eine Dielektrizitätskonstante in den bevorzugten Bereichen (*1) bzw. (*2) aufweisen, während Flüssigkristallverbindungen mit W = -CN häufig eine zu hohe Dielektrizitätskonstante aufweisen und für derartige Mischungen weniger geeignet sind; der Massenanteil an Verbindungen, welche eine terminale Carbonitrilgruppe aufweisen, ist in den auf mittelpolaren Verbindungen basierenden Flüssigkristallmischungen vorzugsweise kleiner als 15 % und insbesondere nicht mehr als 10 %. Sind hochpolare Zusätze mit $\Delta\varepsilon > 20$ z.B. zur Herabsenkung der Schwellenspannung erforderlich, werden vorzugsweise Verbindungen verwendet, bei denen die eine terminale Gruppe die für $R^1$ angegebene Bedeutung hat, während die andere terminale Gruppe durch

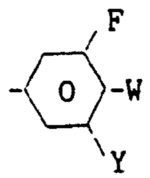

gegeben ist, wobei

W -F, -Cl, $-CF_3$, $-OCF_3$ oder $-OCHF_2$ und
Y H oder F

ist.

Verbindungen mit W = -Cl sind im Vergleich zu entsprechenden Verbindungen mit W = -F in der Regel durch eine höhere Doppelbrechung $\Delta n$ gekennzeichnet und daher oft bevorzugt, wenn eine hohe Doppelbrechung z.B. zur Erhöhung der Streuung im opaken Zustand erwünscht ist.

Durch die vorliegende Erfindung wird dem Fachmann ein begrenzter Pool besonders bevorzugter Verbindungen der Formel I und insbesondere der Formeln If-Ii sowie besonders bevorzugter Flüssigkristallteilmischungen zur Verfügung gestellt. Flüssigkristallmischungen, welche eine oder mehrere Verbindungen der Formel I und insbesondere der Formeln Ia-Ii und ganz besonders mindestens eine der angegebenen Teilmischungen enthalten, weisen vorteilhafte Eigenschaften auf und entsprechen den eingangs beschriebenen Anforderungen, die bei Verwendung in einem elektrooptischen System gemäß dem Oberbegriff von Anspruch 1 gestellt werden, in besonders hohem Maße und sehr viel besser als die bisher in diesen Systemen verwendeten Flüssigkristallmischungen. Dabei kann der Fachmann auf der Grundlage der detaillierten Beschreibung jederzeit ohne erfinderisches Zutun eine Auswahl aus dem beschriebenen Pool bevorzugter Flüssigkristallverbindungen und Flüssigkristallteilmischungen dergestalt treffen, daß die Doppelbrechung $\Delta n$ und/oder der ordentliche Brechungsindex $n_o$ und/oder andere Brechungsindices und/oder die Viskosität und/oder die dielektrische Anisotropie und/oder der Klärpunkt und/oder weitere Parameter des Flüssigkristalls und/oder die Schwellenspannung und/oder weitere elektrooptische Parameter des Systems und/oder deren Temperaturabhängigkeit und/oder der Arbeitstemperaturbereich und/oder die Löslichkeit des Flüssigkristalls in den zu polymerisierenden Monomeren bzw. Oligomeren und/oder in der gehärteten Matrix bzw. dem gehärteten Netzwerk und/oder weitere Parameter des Flüssigkristalls und des Systems im Hinblick auf die jeweilige Anwendung optimiert werden.

Ist z.B. ein hoher Klärpunkt erforderlich, wird der Fachmann z.B. eine Auswahl unter den Verbindungen der Formel I und insbesondere den Teilformeln 1f-1i und den bevorzugten Teilmischungen vorzugsweise so treffen, daß der Massenanteil 2-kerniger Verbindungen an der Flüssigkristallmischung nicht zu hoch ist. Daneben kann der Fachmann dem Flüssigkristall z.B. auch 4-kernige Verbindungen der Formel Ie4-1 - Ie4-4 oder auch andere hochklärende Substanzen zugeben wie z.B.

$$R^2\text{-Phe-Phe-Cyc-}R^3$$

$$R^2\text{-Cyc-Phe-Phe-Cyc-}R^3.$$

In diesen Verbindungen bedeuten $R^2$ und $R^3$ jeweils unabhängig voneinander vorzugsweise Alkyl, Methoxy, Alkoxycarbonyl oder Alkanoyloxy mit 1-15 C-Atomen.

Derartige Zusätze sind dem Fachmann bekannt und er kann sie ohne weiteres aus den oben aufgezählten Substanzklassen auswählen. Dabei wird der Fachmann die Konzentration derartiger Zusätze vorzugsweise so wählen,

daß insbesondere $\Delta n$ und/oder $n_o$ und/oder ein anderer, bei der jeweiligen Ausgestaltung des erfindungsgemäßen elektrooptischen Systems anzupassender Brechungsindex und/oder $\Delta\varepsilon$ und/oder weitere, für die jeweilige Anwendung wichtige physikalische Parameter nur in einem akzeptablen und/oder kleinen und/oder insbesondere vernachlässigbarem Ausmaß beeinflußt werden.

Wird das erfindungsgemäße System z.B. mit einer Wechselspannung angesteuert, ist die Verwendung einer hochviskosen Flüssigkristallmischung erforderlich, da sonst insbesondere bei niederen bis mittleren Frequenzen eine flimmernde Anzeige resultiert. Zur Erhöhung der Viskosität kann der Fachmann der Flüssigkristallmischung hochviskose Flüssigkristallverbindungen zusetzen. Diese Verbindungen werden vorzugsweise aus der Gruppe der Verbindungen der Formel I und insesondere der Formeln Ia-Ii ausgewählt. sie können aber auch den oben genannten Substanzklassen entnommen werden. Insbesondere können zur Erhöhung der Viskosität auch eine oder mehrere Seitenkettenpolymere zugesetzt werden, wie dies in DE 39 19 942 beschrieben ist. Wird das elektrooptische System dagegen z.B. als Matrixdisplay mit hohen Informationsgehalt verwendet, sind insbesondere niedrigviskose Flüssigkristallmischungne zur Erzielung kleiner Schaltzeiten bevorzugt.

Der Fachmann wird in diesem Fall aus der Gruppe der Verbindungen der Formel I und insbesondere der Formeln If-Ii eine Auswahl vorzugsweise so treffen, daß der Anteil 3- und 4-kerniger Verbindungen nicht zu hoch ist; ist die Verwendung eine hohen anteils 3- und 4-kerniger Verbindungen zur Erzielung eines hohen Klärpunkts erforderlich, wird der Fachmann im allgemeinen lateral fluorierte oder chlorierte Verbindungen der Formeln Ia-Ii bevorzugen. Es ist aber auch möglich, daß der Fachmann aus den oben aufgezählten Substanzklassen solche mit niedriger Viskosität auswählt. wie z.B.

$$R^2\text{-Cyc-Phe.3F-Phe-}R^3$$

und der erfindungsgemäßen Flüssigkristallmischung zusetzt. $R^2$ und $R^3$ haben in dieser beispielhaft genannten Verbindung vorzugsweise die oben angegebenen Bedeutungen.

Der Fachmann wird die zur Modifizierung der Viskosität verwendeten Substanzen und ihre Konzentration so wählen, daß andere entscheidende Parameter der Flüssigkristallmischung wie z.B. $\Delta\varepsilon$ und bei Verwendung von Viskositätserniedrigern insbesondere $T_c$ nur in einem akzeptablen und/oder kleinen und/oder unwesentlichen Ausmaß beeinflußt wird.

Gegebenenfalls können hochnematogene Substanzen wie z.B.

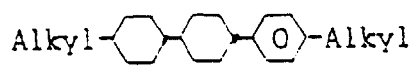

zugesetzt werden, wobei der Fachmann berücksichtigt, daß durch derartige Zusätze andere Parameter und insbesondere die Löslichkeit der Flüssigkristallmischung in dem für die Matrix verwendeten Polymer nicht zu stark geändert werden.

Zur Modifizierung der Doppelbrechung kann der Fachmann z.B. bei Flüssigkristallmischungen, die Verbindungen der Formeln II-IV enthalten, den relativen Anteil dieser Verbindungen an der Mischung variieren. Der Fachmann kann natürlich auch ohne weiteres aus den Verbindungen der Formel I eine im Hinblick auf den gewünschten Wert von $\Delta n$ bevorzugte Auswahl treffen. So sind z.B. Verbindungen der Formel Ig im allgemeinen besonders für Mischungen mit relativ hohem oder hohen $\Delta n$ bevorzugt, während Verbindungen mit 2 oder mehr gesättigten Ringsystemen im allgemeinen erfindungsgemäße Flüssigkristallmischungen mit relativ niedrigen oder niedrigen Werten von $\Delta n$ besonders geeignet sind.

Zur Erzielung niedriger Schwellenspannungen werden im allgemeinen Flüssigkristallmischungen mit sehr hoher dielektrischer Anisotropie $\Delta\varepsilon$ benötigt. Der Fachmann kann aus der Gruppe der Verbindungen der Formel I, insbesondere der Formeln Ia-Ii, weiter aus der Gruppe der Verbindungen der Formeln II-IV und aus der Gruppe der bevorzugten Teilmischungen eine Auswahl so treffen, daß ein bevorzugter Wert für $\Delta\varepsilon$ erhalten wird. Zur Erhöhung von $\Delta\varepsilon$ kann der Fachmann der Flüssigkristallmischung z.B. eine Verbindung der Formel II6 zusetzen. Diese Verbindungen sind außerordentlich stark dielektrisch positiv; das Propyl-Homologe (Alkyl = $C_3H_7$) weist z.B. einen Wert $\Delta\varepsilon$ = 50 auf. Der Fachmann wird die Konzentration derartiger Zusätze so wählen, daß die Flüssigkristallmischung auf die jeweilige Ausgestaltung des elektrooptischen System optimal abgestimmt ist; insbesondere wird er darauf achten, daß $\Delta n$ und/oder $n_o$ und/oder ein oder mehrere weitere Brechungsindices des Flüssigkristalls nur in einem akzeptablen und/oder kleinen und/oder vernachlässigbaren Ausmaß beeinflußt werden.

Der Fachmann kann die Eigenschaften erfindungsgemäßer Flüssigkristallmischungen im Hinblick auf die

jeweilige Anwendung modifizieren und innernalb gewisser Grenzen optimieren, indem er aus der Gruppe der Verbindungen der Formel I und insbesondere der Formeln If-Ii, eine Auswahl dergestalt trifft, daß die Flüssigkristallmischung im Hinblick auf die jeweilige Anwendung optimiert wird.

Entscheidend aber ist, daß Flüssigkristalle, enthaltend Verbindungen der Formel I und insbesondere der Formeln If-Ii enthalten, zur Verwendung in erfindungsgemäßen elektrooptischen Flüssigkristall-Systemen besonders geeignet sind. Ganz besonders geeignet sind Flüssigkristallmischungen, die eine oder mehrere der bevorzugten Teilmischungen enthalten.

Die erfindungsgemäßen Flüssigkristallmischungen, die eine oder mehrere Verbindungen der Formel I und insbesondere der Formeln If-Ii enthalten, stellen für die Anwendung in elektrooptischen Systemen auch besonders geeignete "stabile Gerüstmischungen" dar, die im allgemeinen durch die beschriebenen Methoden und/oder Zusätze im Hinblick auf spezielle Anforderungen optimiert werden können, ohne daß andere Parameter der Mischung gleichzeitig eine zu drastische und die Verwendbarkeit der Mischung in den elektrooptischen Systemen erheblich beeinträchtigende Änderung erfahren.

Die erfindungsgemäßen Flüssigkristallmischungen sind zur Anwendung in elektrooptischen Systemen gemäß dem Oberbegriff von Anspruch 1 besonders geeignet. Den erfindungsgemäßen Flüssigkristallen und den erfindungsgemäßen elektrooptischen Systemen kommt somit eine erhebliche kommerzielle Bedeutung zu.

Die erfindungsgemäßen Flüssigkristallmischungen können durch weitere Zusätze so modifiziert werden, daß sie in allen elektrooptischen Systemen gemäß dem Oberbegriff von Anspruch 1 verwendet werden können.

Derartige Zusätze sind dem Fachmann bekannt und in der Literatur ausführlich beschrieben. So können z. B. pleochroitische Farbstoffe zur Herstellung farbiger elektrooptischer Systeme oder Substanzen zur Veränderung der dielektrischen Anisotropie, der optischen Anisotropie, der Viskosität und/oder der Temperaturabhängigkeit elektrooptischer Parameter der Flüssigkristalle zugesetzt werden. Derartige Substanzen sind z.B. in H. Kelker, R. Hatz, Handbook of Liquid Crystals, Verlag Chemie, Weinheim, 1980 und in den DE-OS 22 09 127, 22 40 864, 23 21 632, 23 38 281, 24 50 088, 26 37 430, 28 53 728 und 29 02 177 beschrieben.

Elektrooptische Flüssigkristallsysteme, bei denen dem Flüssigkristall pleochroitische Farbstoffe in einem Gewichtsprozentbereich von 0-25 %, insbesondere 0-20 % und ganz besonders 0-15 % zugesetzt sind, sind bevorzugt.

Weiter können den erfindungsgemäßen Flüssigkristallmischungen chirale mesogene oder auch nicht mesogene Verbindungen zur Erhöhung der Streuung im opaken Zustand und/oder zur Beeinflussung der Steilheit der elektrooptischen Kennlinie, wie dies z.B. in DE 40 07 039 beschrieben ist, zugesetzt werden. Erfindungsgemäße Flüssigkristalle, die 0-15 % und insbesondere 0-10 % chirale Zusätze enthalten, sind bevorzugt.

Die erfindungsgemäßen elektrooptischen Flüssigkristallsysteme können durch Anlegen einer Gleich- oder Wechselspannung geschaltet werden. Bevorzugt jedoch wird eine Wechselspannung verwendet, die eine Effektiv-Wechselspannungsamplitude zwischen 1 und 240 Volt und eine Wechselspannungsfrequenz zwischen 10 Hz und 10 kHz aufweist. Besonders bevorzugt sind Amplituden zwischen 2 und 220 Volt und Frequenzen zwischen 20 und 120 Hz. Ganz besonders bevorzugt liegt die Amplitude der Wechselspannung zwischen 2 und 130 V.

Die Herstellung der erfindungsgemäß verwendbaren Flüssigkristallmischungen erfolgt in an sich üblicher Weise. In der Regel wird die gewünschte Menge der in geringerer Menge verwendeten Komponenten in den den Hauptbestandteil ausmachenden Komponenten gelöst, zweckmäßig bei erhöhter Temperatur. Es ist auch möglich, Lösungen der Komponenten in einem organischen Lösungsmittel, z.B. in Aceton, Chloroform doer Methanol, zu mischen und das Lösungsmittel nach Durchmischung wieder zu entfernen, beispielsweise durch Destillation.

Die folgenden Beispiele sollen die Erfindung erläutern, ohne sie zu begrenzen.

Es bedeuten:

K: Kristallin-fester Zustand,
S: smektische Phase (der Index kennzeichnet der Phasentyp),
N: nematische Phase,
I: Isotrope Phase.

Die zwischen 2 Symbolen stehende Zahl gibt die Umwandlungstemperatur in Grad Celsius an.

Die angegebenen Prozentzahlen sind Massenprozente.

Beispiel 1 (Vergleichsbeispiel 1)

a) Ein elektrooptisches Flüssigkristallsystem, enthaltend eine Flüssigkristallmischung, die aus folgenden Verbindungen besteht

14,4 % p-trans-4-Propylcyclohexyl-benzonitril
11,2 % p-trans-4-Butylcyclohexyl-benzonitril
20 % p-trans-4-Pentylcyclohexyl-benzonitril
12 % p-trans-4-Heptylcyclohexyl-benzonitril
5,6 % 4-(trans-4-Pentylcyclohexyl)-4'-(trans-4-propylcyclohexyl)-biphenyl
4,8 % 4-Pentyl-4"-cyanoterphenyl
6,4 % 4-(trans-4-Propylcyclohexyl)-phenyl-trans-4-butylcyclohexyl-carboxylat
5,6 % 4-(trans-4-Pentylcyclohexyl)-4'-cyanobiphenyl
20 % 1-(4-(4-Pentylphenyl)-phenyl)-2-(3-fluor-4-cyanophenyl)-ethan

b) Das elektrooptische Flüssigkristallsystem wird nach verschiedenen Verfahren 1.1-1.3 und 2 hergestellt.

1. Mikrotröpfchen-Matrix-Systeme

1.1 Die Flüssigkristallmischung aus a) wird mit dem durch UV-Bestrahlung härtbaren Klebstoff NOA 65 (Norland Products) im Verhältnis 1,6:1 bei Raumtemperatur gerührt, bis eine klare Lösung erhalten wird, die zusammen mit Abstandshaltern (20 µm) zwischen 2 durchsichtige, mit Elektrodenschichten versehene Glassubstrate gebracht wird. Die Glassubstrate werden zusammengedrückt, wodurch ein gleichmäßiger Film mit einer Dicke von 20 µm erhalten wird, der durch eine 1 minütige UV-Bestrahlung ausgehärtet wird.
1.2 Die Flüssigkristallmischung aus a) wird mit Epikote 828 und Capcure 3-800 (Miller Stephenson Company) im Verhältnis 1:1:1 bei Raumtemperatur gerührt, bis eine klare Lösung erhalten wird; die Rührzeit wird so kurz wie möglich gehalten, da die Lösung bei Raumtemperatur bereits nach etwa 1/2 h ausgehärtet ist. Die Lösung wird zusammen mit Abstandshaltern (20 µm) zwischen 2 durchsichtige, mit Elektroden schichten versehene Glassubstrate gebracht, die zusammengedrückt werden, wodurch ein gleichmäßiger Film mit einer Dicke von 20 µm erhalten wird. Zur Beschleunigung des Aushärtprozesses können die Filme auf Temperatur bis 100 °C erwärmt werden.
1.3 5 g der Flüssigkristallmischung aus a) werden mit 15 g 20 % wäßriger PVA-Lösung bei Raumtemperatur 2 Minuten lang mit 2.000 rpm gerührt. Die erhaltene Lösung wird 24 h lang entgast und zusammen mit Abstandshaltern (20 µm) in dünner Schicht auf ein mit einer Elektrodenschicht versehenes Glassubstrat aufgebracht. Die Anordnung wird 1 h bei 85 °C getrooknet, bevor ein zweites mit einer Elektrodenschicht versehenes Glassubstrat aufgedrückt wird, wodurch ein gleichmäßiger Film mit einer Dicke von 20 µm erhalten wird. Das so erhaltene System wird weitere 24 h bei 85 °C getrocknet.

2. Netzwerksystem

Die Flüssigkristallmischung aus a) wird mit Trimethylol-propan-triacrylat als polymerisierbarer Verbindung und 2-Hydroxy-2-methyl-1-phenylpropan-1-on (Darocure 1173, Handelsprodukt von E. Merck, Darmstadt) als Photoinitiator im Verhältnis 80 : 19,8 : 0,2 gerührt und unter Hinzufügung von Abstandhaltern mit einer Dicke von 20 µm zwischen 2 mit Elektrodenschichten versehene Glasplatten gebracht. Zur Härtung des Polymers wurde das erhaltene System mit einer definierten Geschwindigkeit (3 m/min) durch das Strahlungsfeld einer Halogenlampe (70 W/cm) gefahren.
Die nach den Verfahren b) 1.1-1.3 und 2 hergestellten elektrooptischen Systeme zeichnen sich durch einen breiten Arbeitstemperaturbereich, günstige Werte für die elektrooptischen Parameter und deren Temperaturabhängigkeit und insbesondere durch eine niedrige Schwellenspannung aus.

Beispiel 1

a) Ein elektrooptisches Flüssigkristallsystem, enthaltend eine Flüssigkristallmischung, die aus folgenden Verbindungen besteht:

17 % 1-Difluoromethoxy-2-fluoro-4-[trans-4-(trans-4-ethylcyclohexyl)-cyclohexyl]-benzol
17 % 1-Difluoromethoxy-2-fluoro-4-[trans-4-(trans-4-butylcyclohexyl)-cyclohexyl]-benzol
17 % 1-Difluoromethoxy-2-fluoro-4-[trans-4-(trans-4-pentylcyclohexyl)-cyclohexyl]-benzol
11 % 1-Difluoromethoxy-4-[trans-4-(trans-4-pentylcyclohexyl)-cyclohexyl]-benzol
6 % 1-(trans-4-Propylcyclohexyl)-2-(4-difluormethoxyphenyl)-ethan
6 % 1-(trans-4-Pentylcyclohexyl)-2-(4-difluormethoxyphenyl)-ethan

6 % 1-Difluormethoxy-4-(trans-4-pentylcyclohexyl)-benzol
8 % 4-Propyl-4'-difluoromethoxy-biphenyl
12 % 4-(trans-4-Propylcyclohexyl)-4'-difluoromethoxybiphenyl und folgende physikalische Parameter aufweist:

| | |
|---|---|
| Klärpunkt | $T_c$ = 87 °C |
| Viskosität | $\eta$ = 19 $mm^2$ $s^{-1}$ (20 ° C) |
| optische Anisotropie | $\Delta n$ = 0,0985 (20 ° C, 589 nm) |
| dielektrische Anisotropie | $\Delta\varepsilon$ = 6,3 (20 ° C, 1 kHz) |

b) Das elektrooptische Flüssigkristallsystem wird nach dem in Beispiel 1b), 1.1-1.3 und 2 beschriebenen Verfahren hergestellt.

Die nach dem Verfahren b) 1.1-1.3 und 2 hergestellten elektrooptischen Systeme zeichnen sich durch eine gute Herstellbarkeit, einen breiten Arbeitstemperaturbereich, günstige Werte für die elektrooptischen Parameter und deren Temperaturabhängigkeit, eine niedrige Schwellenspannung und einen guten Kontrast sowie insbesondere eine hohe Stabilität aus.

Beispiel 3

a) Ein elektrooptisches System, enthaltend eine Flüssigkristallmischung, die aus folgenden Verbindungen besteht

5,0 % 2-Fluor-4-(trans-4-pentylcyclohexyl)-3"-,4"-difluorterphenyl
8,0 % 1-[4-(2-Fluor-4-propylphenyl)-phenyl]-2-(4-fluorphenyl)-ethan
11,0 % 1-[4-(2-Fluor-4-pentylphenyl)-phenyl]-2-(4-fluorphenyl)-ethan
7,0 % 1-{4-[4-(trans-4-propylcylcohexyl)-2-fluorphenyl]-phenyl}-2-(3,4-difluorphenyl)-ethan
7,0 % 1-{4-[4-(trans-4-pentylcylcohexyl)-2-fluorphenyl]phenyl}-2-(3,4-difluorphenyl)-ethan
2,0 % 1-{4-[4-(trans-4-propylcylcohexyl)-2-fluorphenyl]-phenyl}-2-(3-fluorphenyl)-ethan
6,0 % 1-{4-[4-(trans-4-pentylcylcohexyl)-2-fluorphenyl]-phenyl}-2-(3-fluorphenyl)-ethan
10,0 % 4-(trans-4-Ethylcyclohexyl)-3',4'-difluorbiphenyl
10,0 % 1-(4-Pentylphenyl)-2-[4-(3,4-difluorophenyl)-phenyl]-ethan
10,0 % 4-(trans-4-Propylcyclohexyl)-3',4'-difluorbiphenyl
10,0 % 4-(trans-4-Pentylcyclohexyl)-3',4'-difluorbiphenyl
7,0 % 4-(trans-4-Ethylcyclohexyl)-3',4',5'-trifluorbiphenyl
7,0 % 4-(trans-4-Pentylcyclohexyl)-3',4',5'-trifluorbiphenyl

und folgende physikalische Parameter aufweist:

| | |
|---|---|
| Klärpunkt | $T_c$ = 97 °C |
| optische Anisotropie | $\Delta n$ = 0,1660 (20 °C, 589 nm) |
| ordentlicher Brechungsindex | $\eta_o$ = 1,5115 (20 ° C, 589 nm) |
| dielektrische Anisotropie | $\Delta\varepsilon$ = 7,6 (20 °C, 1 kHz) |

b) Die nach den in Beispiel 1b) beschriebenen Verfahren hergestellten elektrooptischen Systeme zeichnen sich durch einen breiten Arbeitstemperaturbereich, günstige Werte für die elektrooptischen Parameter und insbesondere durch eine hohe UV-Stabilität aus.

Beispiel 4

a) Eine Flüssigkristallmischung, bestehend aus

20,0 % 1-{4-[2-Fluor-4-(trans-4-pentylcyclohexyl)-phenyl]-phenyl}-2-(4-fluorphenyl)-ethan

10,0 % 1-{4-[2-Fluor-4-(trans-4-pentylcyclohexyl)-phenyl]-phenyl}-2-(4-chlorphenyl)-ethan
30,0 % 1-[4-(2-Fluor-4-pentylphenyl)-phenyl]-2-(4-fluorphenyl)-ethan
30,0 % 1-[4-(2-Fluor-4-pentylphenyl)-phenyl]-2-(4-chlorphenyl)-ethan
10,0 % 1-[4-(trans-4-Propylcyclohexyl)-phenyl]-2-(4-fluorphenyl)-ethan

weist die folgenden physikalischen Eigenschaften auf:

| | |
|---|---|
| Klärpunkt | $T_c$ = 104 °C |
| optische Anisotropie | Δn = 0,189 (20 °C, 589 nm) |

b) Das elektrooptische Flüssigkristallsystem, das nach den in Bespiel 1b) beschriebenen Verfahren hergestellt wird, zeichent sich durch eine gute Herstellbarkeit, einen breiten Arbeitstemperaturbereich, günstige Werte für den elektrooptischen Parameter und deren Temperaturabhängigkeit, einen guten Kontrast, eine hohe Winkelunabhängigkeit der Kontraste und insbesondere, auch durch eine hohe UV-Stabilität aus.

Beispiel 5

a) Eine Flüssigkristallmischung bestehend aus

17,5 % 1-{4-[2-Fluor-4-(trans-4-pentylcyclohexyl)-phenyl]-phenyl}-2-(4-fluorphenyl)-ethan
8,5 % 1-{4-[2-Fluor-4-(trans-4-pentylcyclohexyl)-phenyl]-phenyl}-2-(4-chlorphenyl)-ethan
25,5 % 1-[4-(2-Fluor-4-pentylphenyl)-phenyl]-2-(4-fluorphenyl)-ethan
25,5 % 1-[4-(2-Fluor-4-pentylphenyl)-phenyl]-2-(4-chlorphenyl)-ethan
8,5 % 1-[4-(trans-4-Propylcyclohexyl)-phenyl]-2-(4-fluorphenyl)-ethan
8,5 % 1-[4-(trans-4-Pentylcyclohexyl)-phenyl]-2-(4-fluorphenyl)-ethan
8,5 % 1-[4-(trans-4-Propylcyclohexyl)-phenyl]-2-(4-chlorphenyl)-ethan

weist die folgenden physikalischen Eigenschaften auf:

| | |
|---|---|
| Klärpunkt | $T_c$ = 98 °C |
| optische Anisotropie | Δn = 0,176 (20 °C, 589 nm) |
| dielektrische Anisotropie | Δε = 5,0 (20 °C, 1 kHz) |

b) Das elektrooptische Flüssigkristallsystem, das nach den in Bespiel 1b) beschriebenen Verfahren hergestellt wird, zeichent sich durch eine gute Herstellbarkeit, einen breiten Arbeitstemperaturbereich, günstige Werte für den elektrooptischen Parameter und deren Temperaturabhängigkeit, einen guten Kontrast, eine hohe Winkelunabhängigkeit der Kontraste und insbesondere auch durch eine hohe UV-Stabilität aus.

Beispiel 6

a) Eine Flüssigkristallmischung, bestehend aus

17 % 1-{4-[2-Fluor-4-(trans-4-pentylcyclohexyl)-phenyl]-phenyl}-2-(4-fluorphenyl)-ethan
8,5 % 1-{4-[2-Fluor-4-(trans-4-pentylcyclohexyl)-phenyl]-phenyl}-2-(4-chlorphenyl)-ethan
25,5 % 1-[4-(2-Fluor-4-pentylphenyl)-phenyl]-2-(4-fluorphenyl)-ethan
25,5 % 1-[4-(2-Fluor-4-pentylphenyl)-phenyl]-2-(4-chlorphenyl)-ethan
8,5 % 1-[4-(trans-4-Propylcyclohexyl)-phenyl]-2-(4-fluorphenyl)-ethan
7,8 % 4-(trans-4-Pentylcyclohexyl)-1-chlorbenzol
7,2 % 4-(trans-4-Heptylcyclohexyl)-1-chlorbenzol

weist die folgenden physikalischen Eigenschaften auf:

| | |
|---|---|
| Klärpunkt<br>optische Anisotropie | $T_c$ = 87 °C<br>Δn = 0,171 (20 °C, 589 nm) |

b) Das elektrooptische Flüssigkristallsystem, das nach den in Bespiel 1b) beschriebenen Verfahren hergestellt wird, zeichent sich durch eine gute Herstellbarkeit, einen breiten Arbeitstemperaturbereich, günstige Werte für den elektrooptischen Parameter und deren Temperaturabhängigkeit, einen guten Kontrast, eine hohe Winkelunabhängigkeit der Kontraste und insbesondere auch durch eine hohe UV-Stabilität aus.

Beispiel 7

a) Eine Flüssigkristallmischung, bestehend aus

10 % 1-{4-[2-Fluor-4-(trans-4-pentylcyclohexyl)-phenyl]-phenyl}-2-(4-fluorphenyl)-ethan
10 % 1-{4-[2-Fluor-4-(trans-4-pentylcyclohexyl)-phenyl]-phenyl}-2-(4-chlorphenyl)-ethan
20 % 1-[4-(2-Fluor-4-pentylphenyl)-phenyl]-2-(4-fluorphenyl)-ethan
10 % 1-[4-(2-Fluor-4-pentylphenyl)-phenyl]-2-(4-chlorphenyl)-ethan
10 % 4-(trans-4-Pentylcyclohexyl)-1-chlorbenzol
10 % 4-(trans-4-Heptylcyclohexyl)-1-chlorbenzol
15 % 4-Propyl-2'-Fluor-4"-ethylterphenyl
15 % 4-Ethyl-2'-Fluor-4"-propylterphenyl

weist die folgenden physikalischen Eigenschaften auf:

| | |
|---|---|
| Klärpunkt<br>optische Anisotropie | $T_c$ = 75 °C<br>Δn = 0,142 (20 °C, 589 nm) |

b) Das elektrooptische Flüssigkristallsystem, das nach den in Bespiel 1b) beschriebenen Verfahren hergestellt wird, zeichent sich durch eine gute Herstellbarkeit, einen breiten Arbeitstemperaturbereich, günstige Werte für den elektrooptischen Parameter und deren Temperaturabhängigkeit, einen guten Kontrast, eine hohe Winkelunabhängigkeit der Kontraste und insbesondere auch durch eine hohe UV-Stabilität aus.

Beispiel 8

a) Eine Flüssigkristallmischung, bestehend aus

16,9 % 1-{4-[2-Fluor-4-(trans-4-pentylcyclohexyl]-phenyl]-phenyl}-2-(4-fluorphenyl)-ethan
8,5 % 1-{4-[2-Fluor-4-(trans-4-pentylcyclohexyl)-phenyl]-phenyl}-2-(4-chlorphenyl)-ethan
25,3 % 1-[4-(2-Fluor-4-pentylphenyl)-phenyl]-2-(4-fluorphenyl)-ethan
25,3 % 1-[4-(2-Fluor-4-pentylphenyl)-phenyl]-2-(4-chlorphenyl)-ethan
8,5 % 1-[4-(trans-4-Proplcyclohexyl)-phenyl]-2-(4-fluorphenyl)-ethan
15,5 % 1-[trans-4-(trans-4-Propylcyclohexyl)-cyclohexyl]-2-(4-chlorphenyl)-ethan

weist die folgenden physikalischen Eigenschaften auf:

| | |
|---|---|
| Klärpunkt<br>optische Anisotropie | $T_c$ = 112 °C<br>Δn = 0,178 (20 °C, 589 nm) |

b) Das elektrooptische Flüssigkristallsystem, das nach den in Bespiel 1b) beschriebenen Verfahren hergestellt wird, zeichent sich durch eine gute Herstellbarkeit, einen breiten Arbeitstemperaturbereich, günstige Werte für die elektrooptischen Parameter und deren Temperaturabhängigkeit, einen guten Kontrast, eine hohe Winkelunabhängigkeit der Kontraste und insbesondere auch durch eine hohe UV-Stabilität aus.

Beispiel 9

a) Eine Flüssigkristallmischung, bestehend aus

17,0 % 1-{4-[2-Fluor-4-(trans-4-pentylcyclohexyl)-phenyl]-phenyl}-2-(4-fluorphenyl)-ethan
8,5 % 1-{4-[2-Fluor-4-(trans-4-pentylcyclohexyl)-phenyl]-phenyl}-2-(4-chlorphenyl)-ethan
25,5 % 1-[4-(2-Fluor-4-pentylphenyl)-phenyl]-2-(4-fluorphenyl)-ethan
25,5 % 1-[4-(2-Fluor-4-pentylphenyl)-phenyl]-2-(4-chlorphenyl)-ethan
8,5 % 1-[4-(trans-4-Propylcyclohexyl)-phenyl]-2-(4-fluorphenyl)-ethan
7,6 % 4-(trans-4-Pentylcyclohexyl)-1-fluorbenzol
7,4 % 4-(trans-4-Hexylcyclohexyl)-1-fluorbenzol

weist die folgenden physikalischen Eigenschaften auf:

| | |
|---|---|
| Klärpunkt | $T_c$ = 80 °C |
| optische Anisotropie | Δn = 0,172 (20 °C, 589 nm) |

b) Das elektrooptische Flüssigkristallsystem, das nach den in Bespiel 1b) beschriebenen Verfahren hergestellt wird, zeichnet sich durch eine gute Herstellbarkeit, einen breiten Arbeitstemperaturbereich, günstige Werte für die elektrooptischen Parameter und deren Temperaturabhängigkeit, einen guten Kontrast, eine hohe Winkelunabhängigkeit der Kontraste und insbesondere auch durch eine hohe UV-Stabilität aus.

Beispiel 10 (Vergleichsbeispiel 2)

a) Ein elektrooptisches Flüssigkristallsystem, enthaltend eine Flüssigkristallmischung, die aus folgenden Verbindungen besteht:

20,0 % 2-(4-Cyanophenyl)-5-propylpyridin
20,0 % 2-(4-Cyanophenyl)-5-butylpyridin
20,0 % 2-(4-Cyanophenyl)-5-pentylpyridin
20,0 % 2-(4-Cyanophenyl)-5-(4-pentylphenyl)-pyridin
10,0 % 4-(trans-4-Propylcyclohexyl)-3',4'-difluorobiphenyl
10,0 % 4-(trans-4-Pentylcyclohexyl)-3',4'-difluorobiphenyl

und folgende physikalischen Eigenschaften aufweist:

| | |
|---|---|
| Klärpunkt | $T_c$ = 86 °C |
| optische Anisotropie | Δn = 0,2436 (20° C, 589 nm) |
| ordentlicher Brechungsindex | $n_o$ = 1,5259 (20°C, 589 nm) |
| dielektrische Anisotropie | Δε = 21,8 (1 kHz, 20°C) |

b) Das elektrooptische System wird nach den in Beispiel 1b), 1.1, 1.2, 1.3 und 2 beschriebenen Verfahren hergestellt, wobei jedoch bei dem zu 1.1 analogen Verfahren ein Verhältnis von Flüssigkristall zu NOA 65 von 1 : 1 gewählt wird und Abstandhalter von 10 μm verwendet wurden.

In Fig. 2 ist die relative Transmission für das nach dem in Beispiel 1b), 1.1 beschriebenen Verfahren hergestellte elektrooptische System als Funktion der angelegten Spannung (sinusförmige Wechselspannung (Effektivwert), Frequenz 100 Hz) wiedergegeben.
Dieses System zeichnet sich insbesondere durch eine niedrige Schwellenspannung, einen vorteilhaften Wert für die Steilheit der elektrooptischen Kennlinie und durch eine hohe UV-Stabilität aus.

## Patentansprüche

1. Elektrooptisches Flüssigkristallsystem,

- welches zwischen 2 Elektroden, die gegebenenfalls auf Substratplatten aufgebracht sind, eine dielektrisch positive Flüssigkristallmischung und ein weiteres optisch transparentes Medium enthält, wobei die Flüsigkristallmischung in Form mehr oder weniger voneinander abgegrenzter Kompartimente in das optisch transparente Medium eingebettet ist oder in dem optisch transparenten Medium eine mehr oder weniger zusammenhängende, kontinuierliche Phase bildet,
- dessen Flüssigkristallmoleküle im ausgeschalteten Zustand eine unregelmäßige Orientierung aufweisen,
- bei dem einer der Brechungsindizes der Flüsigkristallmischung im wesentlichen mit dem Brechungsindex der Matrix $n_m$ übereinstimmt und/oder bei dem der Quotient aus der Masse der Flüssigkristallmischung und der Masse des optisch transparenten Mediums 1,5 oder mehr beträgt,
- welches in einem der beiden Schaltzustände unabhängig von der Polarisation des einfallenden Lichts eine gegenüber dem anderen Zustand verminderte Transmission aufweist,

dadurch gekennzeichnet, daß die Flüssigkristallmischung eine oder mehrere Verbindungen der Formel I mit $3 \leq \Delta\varepsilon \leq 15$ in einem Massenanteil von nicht weniger als 50 % enthält

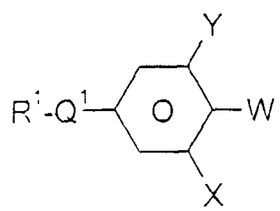

I

worin

Q¹

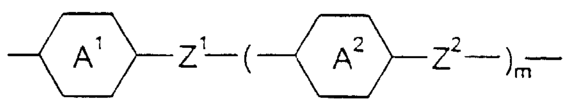

,

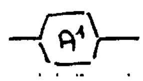

und

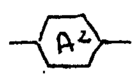

unabhängig voneinander trans-1,4-Cyclohexylen, 1,4-Phenylen, 2-Fluor-1,4-phenylen, 3-Fluor-1,4-phenylen und einer von $A^1$ und, soweit vorhanden, $A^2$, auch Pyridin-2,5-diyl, Pyrimidin-2,5-diyl 1,3-Dioxan-2,5-diyl, Tetrahydropyran-2,5-diyl oder Naphthalin-2,6-diyl,

| | |
|---|---|
| $Z^1$ und $Z^2$ | unabhängig voneinander eine Einfachbindung oder $-CH_2CH_2-$, |
| Y und X | unabhängig voneinander H oder F, |
| W | -Cl, -F, $-CF_3$, $-OCF_3$ oder $-OCHF_2$, |
| $R^1$ | Alkyl mit 1-12 C-Atomen, worin auch eine oder 2 nicht benachbarte $CH_2$-Gruppen durch -O- oder -HC=CH- ersetzt sein können, und |
| m | 0, 1 oder 2 |

bedeuten, mit der Maßgabe, daß

die Flüssigkristallmischung keine Verbindung enthaltend einen Stickstoff-haltigen Heterocyclus, aufweist.

2. System nach Anspruch 1, dadurch gekennzeichnet, daß es sich um ein PDLC-System handelt.

3. System nach Anspruch 1, dadurch gekennzeichnet, daß es sich um ein NCAP-System handelt.

4. System nach Anspruch 1, dadurch gekennzeichnet, daß es sich um ein PN-System handelt.

5. System nach einem der Ansprüche 1-4, dadurch gekennzeichnet, daß die Flüssigkristallmischung neben einer dielektrisch positiven Komponente A, bestehend aus dielektrisch positiven Verbindungen mit $\Delta\varepsilon \geqq 2$, eine dielektrisch neutrale Komponente B, bestehend aus Verbindungen mit $-2 \leqq \Delta\varepsilon \leqq +2$, und gegebenenfalls eine dielektrisch negative Komponente C, bestehend aus Verbindungen mit $\Delta\varepsilon < -2$, enthält.

6. System nach einem der Ansprüche 1-5, dadurch gekennzeichnet, daß die Flüssigkristallmischung eine oder mehrere Verbindungen der Formel Ig enthält,

$$R^1\text{-}Q^4\text{-COO-}Q^5\text{-}R^2 \qquad \text{Ig}$$

worin
die Reste $Q^4$ und $Q^5$ jeweils unabhängig voneinander

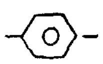, 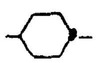, 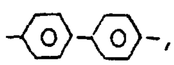, 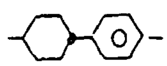, 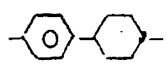 oder 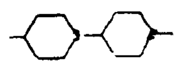,

und einer von $Q^4$ und $Q^5$ auch

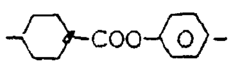 oder 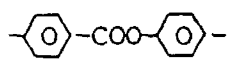

bedeuten, und
$R^1$ und $R^2$ jeweils unabhängig voneinander die in Anspruch 1 für $R^1$ gegebene Bedeutung haben.

7. System nach einem der Ansprüche 1-6, dadurch gekennzeichnet, daß die Flüssigkristallmischung eine oder mehrere Verbindungen der Formel Ii enthält,

$$R^1\text{-}Q^8\text{-}CH_2CH_2\text{-}Q^9\text{-}R^2 \qquad \text{Ii}$$

worin
$R^1$ und $R^2$ jeweils unabhängig voneinander die in Anspruch 1 für $R^1$ gegebene Bedeutung haben, und die Reste $Q^8$ und $Q^9$ jeweils unabhängig voneinander trans-1,4-Cyclohexylen, 1,4-Phenylen, 4,4'-Biphenylyl, 4,4'-Cyclohexylphenyl oder 4,4'-Phenylcyclohexyl, wobei einer der im Molekül vorhandenen 1,4-Phenylengruppen auch durch Fluor oder Chlor substituiert sein kann,
bedeuten.

8. System nach einem der Ansprüche 1-7, dadurch gekennzeichnet, daß die Flüssigkristallmischung eine dielektrische Anisotropie $\Delta\varepsilon > 3$ hat.

9. System nach Anspruch 8, dadurch gekennzeichnet, daß der Massenanteil von Verbindungen, welche eine terminale Carbonitrilverbindung aufweisen, an der Flüssigkristallmischung kleiner als 15 % ist.

10. System nach einem der Ansprüche 1-9, dadurch gekennzeichnet, daß die Flüssigkristallmischung einen pleochroitischen Farbstoff enthält.

**11.** System nach einem der Ansprüche 1-10, dadurch gekennzeichnet, daß die Flüssigkristallmischung eine Dotierkomponente enthält.

**12.** Verwendung des elektrooptischen Fiüssigkristallsystems nach einem der Ansprüche 1-11 für Guest-Host-Anzeigen-Systeme, für mit aktiver oder passiver Matrix angesteuerte Displays, für Projekttionssysteme und für Schalter für großflächige Anzeigensysteme.

**13.** Verwendung des elektrooptischen Flüssigkristallsystems nach einem der Ansprüche 1-11 für architektonische Anwendungen und für Kraftfahrzeuge.

**14.** Elektrooptisches Systen, enthaltend ein elektrooptisches Flüssigkristallsystem nach einem der Ansprüche 1-11, welches durch eine aktive Matrix angesteuert wird.

## Claims

**1.** Electrooptical liquid crystal system

- which contains a dielectrically positive liquid crystal mixture and a further optically transparent medium between 2 electrodes which are optionally applied to substrate sheets, where the liquid crystal mixture is embedded in the optically transparent medium in the form of compartments which are separated to a greater or lesser extent from one another or forms a more or less coherent, continuous phase in the optically transparent medium,
- whose liquid crystal molecules in the switched-off state have an irregular orientation,
- in which one of the refractive indices of the liquid crystal mixture essentially agrees with the refractive index of the matrix $n_m$ and/or in which the quotient of the mass of the liquid crystal mixture and of the mass of the optically transparent medium is 1.5 or more,
- which, independently of the polarization of the incident light, has a reduced transmission in one of the two switch states compared to the other state,

characterized in that the liquid crystal mixture contains one or more compounds of the formula I where $3 \leq \Delta\varepsilon \leq 15$ in a mass content of not less than 50%

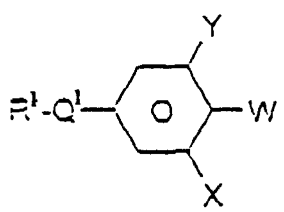

I

in which

$Q^1$ is

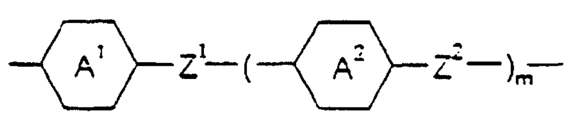

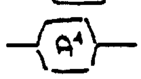 and 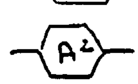

are independently of one another trans-1,4-cyclohexylene, 1,4-phenylene, 2-fluoro-1,4-phenylene, 3-fluoro-1,4-phenylene and one of $A^1$ and, if present, $A^2$, is also pyridine-2,5-diyl, pyrimidine-2,5-diyl, 1,3-dioxane-2,5-diyl, tetrahydropyran-2,5-diyl or naphthalene-2,6-diyl,

$Z^1$ and $Z^2$ are independently of one another a single bond or $-CH_2CH_2-$,

Y and X are independently of one another H or F,

W is -Cl, -F, $-CF_3$, $-OCF_3$ or $-OCHF_2$,
$R^1$ is alkyl having 1-12 C atoms, in which one or 2 non-adjacent $CH_2$ groups can also be replaced by -O- or -HC=CH-, and
m is 0, 1 or 2,

with the proviso that
the liquid crystal mixture has no compound containing a nitrogen-containing heterocycle.

2. System according to Claim 1, characterized in that it is a PDLC system.

3. System according to Claim 1, characterized in that it is an NCAP system.

4. System according to Claim 1, characterized in that it is a PN system.

5. System according to one of Claims 1-4, characterized in that the liquid crystal mixture contains, in addition to a dielectrically positive component A consisting of dielectrically positive compounds having $\Delta\varepsilon \geq 2$, a dielectrically neutral component B consisting of compounds having $-2 \leq \Delta\varepsilon \leq +2$, and optionally a dielectrically negative component C consisting of compounds having $\Delta\varepsilon < -2$.

6. System according to one of Claims 1-5, characterized in that the liquid crystal mixture contains one or more compounds of the formula Ig

$$R^1\text{-}Q^4\text{-COO-}Q^5\text{-}R^2 \qquad \text{Ig}$$

in which
the radicals $Q^4$ and $Q^5$ in each case independently of one another are

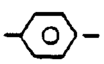, 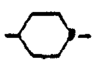, 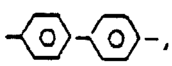, 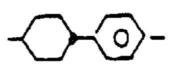, 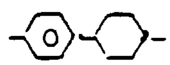

or

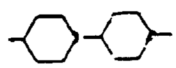,

and one of $Q^4$ and $Q^5$ is also

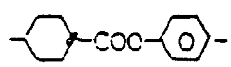

or

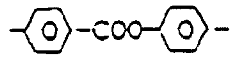,

and
$R^1$ and $R^2$ in each case independently of one another have the meaning given in Claim 1 for $R^1$.

7. System according to one of Claims 1-6, characterized in that the liquid crystal mixture contains one or more compounds of the formula Ii

$$R^1\text{-}Q^8\text{-}CH_2CH_2\text{-}Q^9\text{-}R^2 \qquad \text{Ii}$$

in which
$R^1$ and $R^2$ in each case independently of one another have the meaning given in Claim 1 for $R^1$, and the radicals $Q^8$ and $Q^9$ in each case independently of one another are trans-1,4-cyclohexylene, 1,4-phenylene, 4,4'-biphenylyl, 4,4'-cyclohexylphenyl or 4,4'-phenylcyclohexyl, where one of the 1,4-phenylene groups present in the molecule can also be substituted by fluorine or chlorine.

**8.** System according to one of Claims 1-7, characterized in that the liquid crystal mixture has a dielectric anisotropy $\Delta\varepsilon > 3$.

**9.** System according to Claim 8, characterized in that the mass content of compounds which contain a terminal carbonitrile compound in the liquid crystal mixture is less than 15%.

**10.** System according to one of Claims 1-9, characterized in that the liquid crystal mixture contains a pleochroitic dye.

**11.** System according to one of Claims 1-10, characterized in that the liquid crystal mixture contains a doping component.

**12.** Use of the electrooptical liquid crystal system according to one of Claims 1-11 for guest-host display systems, for active or passive matrix-controlled displays, for projection systems and for switches for large-area display systems.

**13.** Use of the electrooptical liquid crystal system according to one of Claims 1-11 for architectural applications and for motor vehicles.

**14.** Electrooptical system, containing an electrooptical liquid crystal system according to one of Claims 1-11, which is controlled by an active matrix.

## Revendications

**1.** Système à cristaux liquides électro-optique,

- qui comprend entre deux électrodes, qui sont éventuellement disposées sur des plaques supports, un mélange de cristaux liquides positif du point de vue diélectrique et un autre milieu optiquement transparent, le mélange de cristaux liquides étant enrobé dans le milieu optiquement transparent sous la forme de compartiments plus ou moins séparés les uns des autres ou formant dans le milieu optiquement transparent une phase continue, plus ou moins cohérente,
- dont les molécules de cristaux liquides présentent à l'état hors circuit une orientation irrégulière,
- dans lequel l'un des indices de réfraction du mélange de cristaux liquides coïncide pratiquement avec l'indice de réfraction de la matrice $n_M$ et/ou dans lequel le quotient de la masse du mélange de cristaux liquides et de la masse du milieu optiquement transparent vaut 1,5 ou plus,
- qui présente dans l'un des deux états de commutation indépendamment de la polarisation de la lumière incidente une transmission réduite par rapport à l'autre état,

caractérisé en ce que
le mélange de cristaux liquides contient un ou plusieurs composés de formule I avec $3 \leq \Delta\varepsilon \leq 15$ en une proportion massique d'au moins 50 %

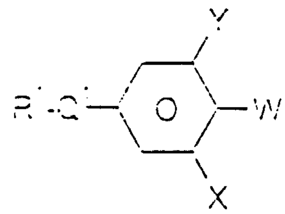

I

où

$Q^1$ est

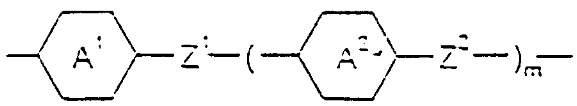,

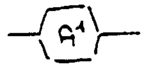 et 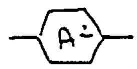

représentent indépendamment l'un de l'autre, un groupe trans-1,4-cyclohexylène, 1,4-phénylène, 2-fluoro-1,4-phénylène, 3-fluoro-1,4-phénylène et l'un des groupes $A^1$ et, pour autant qu'il soit présent, $A^2$ également un groupe pyridine-2,5-diyle, pyrimidine-2,5-diyle, 1,3-dioxanne-2,5-diyle, tétrahydro-pyranne-2,5-diyle ou naphtalène-2,6-diyle,
$Z^1$ et $Z^2$ représentent, indépendamment l'un de l'autre, une simple liaison ou $-CH_2-CH_2-$,
Y et X désignent, indépendamment l'un de l'autre, H ou F,
W représente -Cl, -F, $-CF_3$, $-OCF_3$ ou $OCHF_2$,
$R^1$ désigne un radical alkyle ayant 1 à 12 atomes de carbone, où également un ou deux groupes $CH_2$ non vicinaux peuvent être remplacés par -O- ou -HC=CH-, et
m est 0, 1 ou 2,

avec pour conditions que le mélange de cristaux liquides ne présente aucun composé comportant un hétérocycle contenant de l'azote.

**2.** Système selon la revendication 1, caractérisé en ce qu'il s'agit d'un système PDLC.

**3.** Système selon la revendication 1, caractérisé en ce qu'il s'agit d'un système NCAP.

**4.** Système selon la revendication 1, caractérisé en ce qu'il s'agit d'un système PN.

**5.** Système selon l'une des revendications 1 à 7, caractérisé en ce que le mélange de cristaux liquides contient, outre un composant A positif du point de vue diélectrique, constitué de composés diélectriquement positifs avec $\Delta\varepsilon \geq 2$, un composant diélectriquement neutre, B, constitué de composés avec $-2 \leq \Delta\varepsilon \leq +2$, et le cas échéant un composant diélectriquement négatif C, constitué de composés avec $\Delta\varepsilon < -2$.

**6.** Système selon l'une des revendications 1-5, caractérisé en ce que le mélange de cristaux liquides contient un ou plusieurs composés de formule Ig

$$R^1-Q^4-COO-Q^5-R^2 \qquad \text{Ig}$$

dans laquelle
les radicaux $Q^4$ et $Q^5$ représentent chacun indépendamment l'un de l'autre

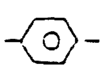, 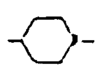, 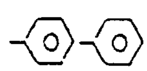, 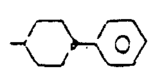, 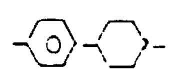

ou

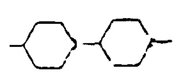,

et un des radicaux $Q^4$ et $Q^5$ représente également

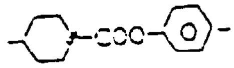 ou 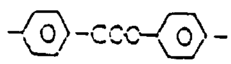

et
$R^1$ et $R^2$ ont chacun indépendamment l'un de l'autre la signification indiquée dans la revendication 1 pour $R^1$.

7. Système selon l'une des revendications 1-6, caractérisé en ce que le mélange à cristaux liquides contient un ou plusieurs composés de formule Ii

$$R^1\text{-}Q^8\text{-}CH_2CH_2\text{-}Q^9\text{-}R^2 \qquad \text{Ii}$$

dans laquelle
$R^1$ et $R^2$ ont chacun indépendamment l'un de l'autre la signification donnée dans la revendication 1 pour $R^1$, et les radicaux $Q^8$ et $Q^9$ représentent chacun indépendamment l'un de l'autre un trans-1,4-cyclohexylène, 1,4-phénylène, 4,4'-biphénylyle, 4,4'-cyclohexylphényle ou 4,4'-phénylcyclohexyle, où un des groupes 1,4-phénylène présents dans la molécule peut également être substitué par un fluor ou un chlore.

8. Système selon l'une des revendications 1-7, caractérisé en ce que le mélange à cristaux liquides a une anisotropie diélectrique $\Delta\varepsilon$ supérieure à 3.

9. Système selon la revendication 8, caractérisé en ce que la proportion massique des composés qui présentent un composé carbonitrile terminal dans le mélange des cristaux liquides est inférieure à 15 %.

10. Système selon l'une des revendications 1-9, caractérisé en ce que le mélange à cristaux liquides contient un colorant pléochroïque.

11. Système selon l'une des revendications 1-10, caractérisé en ce que le mélange à cristaux liquides contient un composant de dopage.

12. Utilisation du système à cristaux liquides électro-optique selon l'une des revendications 1-11 pour les systèmes d'affichage hôte-récepteur ("guest-host") pour les affichages commandés par une matrice active ou passive, pour les systèmes de projection et pour les commutateurs pour systèmes d'affichage de grande surface.

13. Utilisation du système à cristaux liquides électro-optique selon l'une quelconque des revendications 1-11 pour des applications architectoniques et pour les véhicules automobiles.

14. Système électro-optique contenant un système à cristaux liquides électro-optique selon l'une des revendications 1-11 qui est commandé par une matrice active.

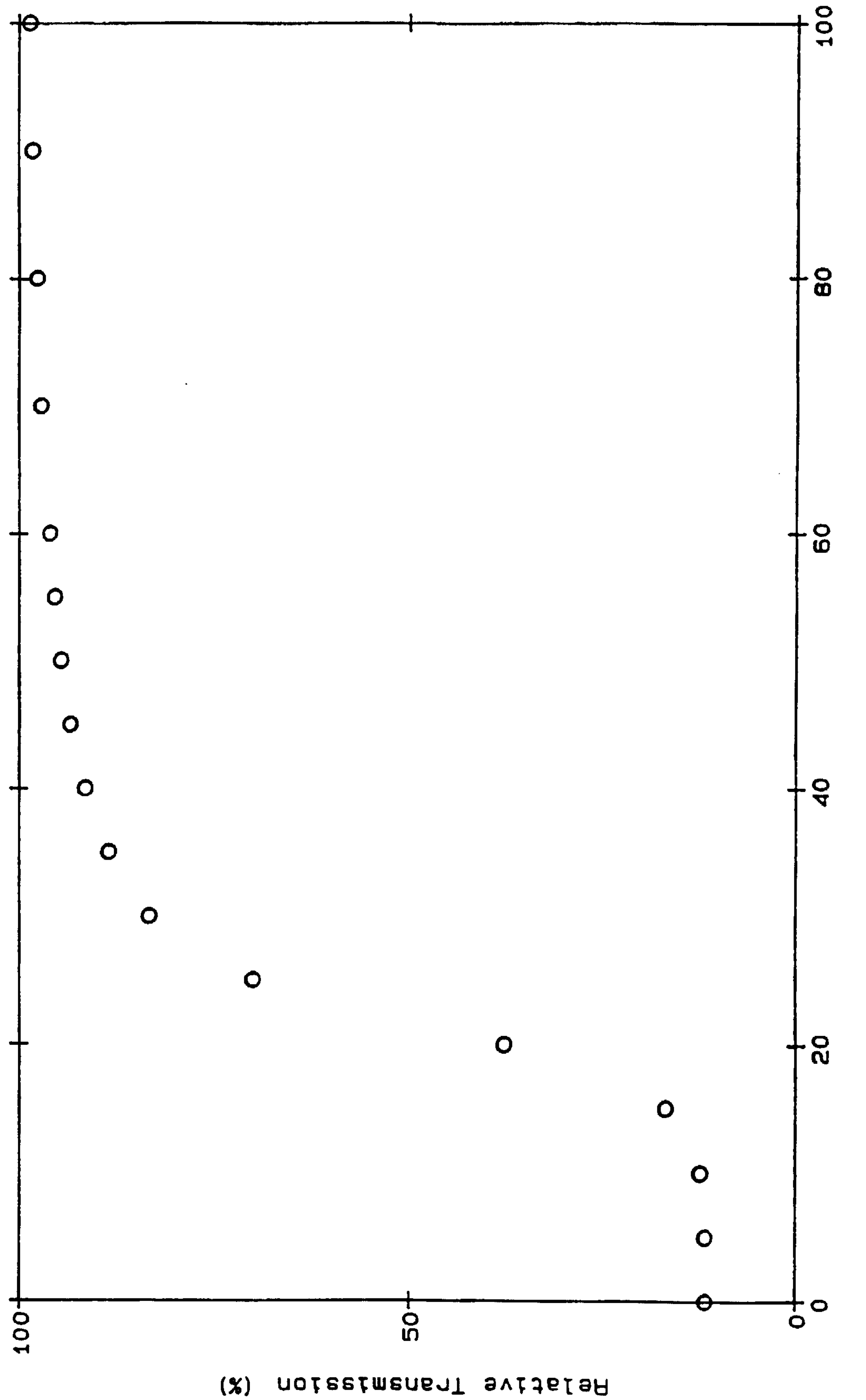
Relative Transmission (%)
100
50
0
Spannung (Volt/AC)
0
20
40
60
80
100

Fig. 1

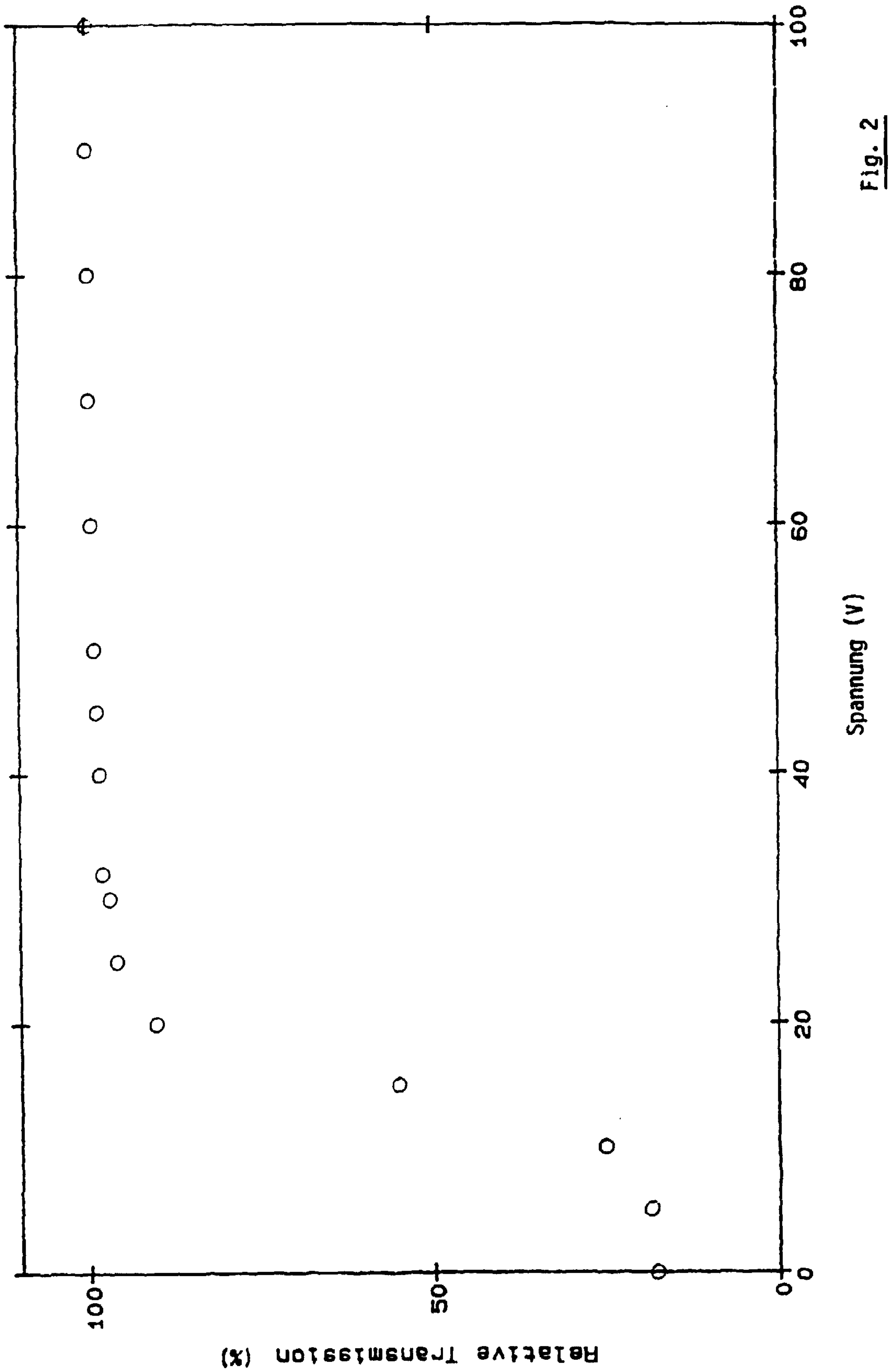


Fig. 2